# EUROPÄISCHE PATENTSCHRIFT

(11) **EP 2 914 790 B1**
(45) Veröffentlichungstag und Bekanntmachung des Hinweises auf die Patenterteilung: **07.08.2019**
(21) Anmeldenummer: 13785836.1
(22) Anmeldetag: 28.10.2013
(51) Int. Cl.: E04H 12/34

(54) **VERFAHREN ZUR HERSTELLUNG EINES TURMBAUWERKS AUS STAHLBETON**
METHOD FOR PRODUCING A TOWER CONSTRUCTION FROM REINFORCED CONCRETE
PROCÉDÉ DE CONSTRUCTION D'UNE TOUR EN BÉTON ARMÉ

(30) Priorität: 30.10.2012 AT 504802012
(43) Veröffentlichungstag der Anmeldung: 09.09.2015
(73) Patentinhaber: Technische Universität Wien, 1040 Wien (AT)
(72) Erfinder: KOLLEGGER, Johann, 3400 Klosterneuburg (AT); SCHÖNWEGER, Maria Charlotte, 1030 Wien (AT)
(74) Vertreter: Schwarz & Partner Patentanwälte OG
(86) Internationale Anmeldenummer: PCT/EP2013/072472
(87) Internationale Veröffentlichungsnummer: WO 2014/067884

(56) Entgegenhaltungen:
- EP-A1- 1 876 316
- EP-A2- 1 889 988
- WO-A1-2005/098160
- WO-A2-2009/121581
- DE-A1- 4 023 465
- DE-C1- 19 943 082
- DE-U1-202010 000 169
- US-A- 5 038 540

## Beschreibung

Die Erfindung betrifft ein Verfahren zur Herstellung von Turmbauwerken aus Stahlbeton mit den Merkmalen des Oberbegriffs von Anspruch 1.

Aus dem Stand der Technik ist bei der Herstellung von Turmbauwerken aus Stahlbeton der Einsatz von Kletterschalungen, Gleitschalungen oder die Verwendung von großformatigen Fertigteilen mit Vergussfugen oder trockenen Fugen, die durch eine mittels annähernd vertikal angeordneten Spanngliedern aufgebrachte Vorspannung überdrückt werden, bekannt.

Kletterschalungen und Gleitschalungen werden häufig zur Herstellung von Turmbauwerken aus Stahlbeton eingesetzt. Nachteilig bei diesen beiden Verfahren ist, dass sich die Schalungen auf dem zuletzt betonierten Bauabschnitt abstützen und deswegen die Herstellungsgeschwindigkeit vom Erhärtungsprozess des Betons abhängt.

Aus dem Dokument DE 4023465 A1 ist beispielsweise ein in Beton-Verbundbauweise hergestelltes Turmbauwerk bekannt, wobei Gleit- oder Kletterschalungen zur Herstellung von Turmbauwerken aus Ortbeton als teuer und kompliziert in der Handhabung beschrieben sind. Deshalb wird darin vorgeschlagen, aus statischen Gründen mehrere, über die gesamte Turmhöhe durchlaufende Stützen vorzusehen, welche mindestens teilweise in den Bereich der Ortbeton-Kernschicht eingreifen und als statische Träger mit dem errichteten Turmbauwerk verbunden bleiben.

Ein schnellerer Baufortschritt ist möglich, wenn großformatige Fertigteile aus Stahlbeton zur Herstellung des Turmbauwerks verwendet werden. Nachteilig beim Bauen mit großformatigen Fertigteilen sind die zahlreichen horizontalen Fugen im Turmbauwerk. Zusätzliche vertikale Fugen sind erforderlich, wenn die Abmessungen des Turmbauwerks in einem horizontalen Schnitt so groß werden, dass die Segmente nicht mehr in einem Stück transportiert werden können. Große Ringsegmente müssen deshalb aus Gründen des Transports halbiert oder gedrittelt werden.

Die Ausbildung der Fugen verursacht einen zusätzlichen Aufwand. Vertikale Fugen können durch eine Fugeneinlage und eine Schraubverbindung geschlossen werden. Horizontale Fugen werden oft mit einer Vergussmasse und einer in Längsrichtung des Turmbauwerks wirkenden Vorspannung abgedichtet und überdrückt. Nachteilig dabei ist, dass der Montagefortschritt von den Außentemperaturen abhängt, weil die Vergussmassen üblicherweise nur in einem Temperaturbereich von + 5°C bis + 30°C verarbeitet werden können. Alternativ zur Anordnung einer Vergussmasse in den horizontalen Fugen können die Ober- und Unterseiten der Fertigteile durch Schleifen oder Fräsen bearbeitet werden und die Fertigteile ausschließlich direkt übereinander mit einer trockenen Fuge montiert werden. Eine Montage mit trockenen Fugen bietet den Vorteil, dass keine Rücksicht auf die Außentemperaturen genommen werden muss. Nachteilig ist hingegen der zusätzliche Aufwand für die maßgenaue Bearbeitung der Fugen durch Schleifen oder Fräsen. Ein weiterer Nachteil der Fertigteilbauweise ist, dass in den Fugen zwischen den Fertigteilen keine Bewehrung vorhanden ist. Bei den Vertikalfugen kann dieser Nachteil durch Schraubverbindungen kompensiert werden, allerdings entsteht dadurch ein zusätzlicher Aufwand für die Herstellung der Stahleinbauteile für die Schraubverbindungen. Das Überdrücken der horizontalen Fugen mit einer Vorspannung bewirkt zusätzliche Druckspannungen im Beton, die nachteilig für die Beanspruchung des Turmbauwerks auf Ermüdung sind.

Es ist daher Aufgabe der vorliegenden Erfindung ein Verfahren zu schaffen, dass einen schnelleren Baufortschritt ermöglicht, als dies bei der Ortbetonbauweise mittels Kletterschalung oder Gleitschalung der Fall ist, und das gleichzeitig die bei der Fertigteilbauweise auftretenden horizontalen und vertikalen Bauteilfugen ohne durchgehende Bewehrung vermeidet.

Diese Aufgaben werden durch die im Anspruch 1 angegebenen Verfahrensschritte gelöst. Vorteilhafte Weiterbildungen der Erfindung sind in den Unteransprüchen definiert.

Bei einem erfindungsgemäßen Verfahren zur Herstellung eines Turmbauwerks aus Stahlbeton mit mindestens einem sich in Längsrichtung erstreckenden Hohlraum im Inneren des Turmbauwerks, werden zuerst
- entlang eines Umfangs des Turmbauwerks Doppelwandelemente jeweils umfassend eine Außenplatte sowie eine Innenplatte in vertikaler oder geneigter Lage unter Bildung von vertikalen Außenfugen zwischen benachbarten Außenplatten sowie von vertikalen Innenfugen zwischen benachbarten Innenplatten aufgestellt,
- anschließend werden die Doppelwandelemente durch eine Befestigung an Schienen einer Kletterschalung in ihrer nebeneinander aufgestellten Lage gegen ein Umfallen gesichert,
- danach wird im Bereich der vertikalen Außenfugen sowie der vertikalen Innenfugen zwischen den Außenplatten und den Innenplatten eine Bewehrung, die die vertikalen Fugen kreuzt, eingebaut, und
- im Bereich von horizontalen Außenfugen sowie von horizontalen Innenfugen zwischen den Außenplatten und den Innenplatten eine Bewehrung, die die horizontalen Fugen kreuzt, eingebaut,
- die vertikalen Außenfugen und vertikalen Innenfugen zwischen den Doppelwandelementen werden je nach Ausführung mit Füllbeton, Vergussmörtel, Silikon oder einem Abdichtband geschlossen,
- danach wird eine entlang des Umfangs des Turmbauwerks angeordnete Arbeitsbühne um eine Bauabschnittshöhe angehoben,
- die Doppelwandelemente werden mit Füllbeton gefüllt und
- die zuvor angegebenen Schritte zur Herstellung eines Bauabschnitts mit einer Bauabschnittshöhe, welche im Wesentlichen einer Höhe der Doppelwandelemente entspricht, werden so oft wiederholt, bis eine gewünschte Gesamthöhe des Turmbauwerks erreicht wird.

Im Vergleich zu den bekannten Verfahren zur Herstellung von Turmbauwerken mit Fertigteilen weist das erfindungsgemäße Verfahren den wesentlichen Vorteil auf, dass nicht aufwändige, oft ringförmig oder gekrümmt gefertigte Stahlschalungen zur Herstellung der Fertigteile erforderlich sind. Vorteilhaft ist die Herstellung von beliebigen Bauteilformen ohne zusätzlichen Aufwand für die Herstellung von Stahlschalungen möglich, weil die Geometrie des Turmbauwerks über die Abmessungen der Doppelwandelemente gesteuert wird. Ebene Doppelwandelemente sind außerdem wesentlich einfacher zu transportieren als große, schalenartig gekrümmte Fertigteile in Kreissegmentform bzw. Kreisringform. Außerdem sind beim erfindungsgemäßen Herstellungsverfahren die Hubgewichte der zusammengefügten Fertigteile geringer, als dies bei schalenförmig gekrümmten Fertigteilen der Fall ist.

Weiters ist als Vorteil des erfindungsgemäßen Herstellungsverfahrens zu erwähnen, dass im Füllbeton im Bereich von sämtlichen vertikalen Außenfugen und vertikalen Innenfugen eine durchgehende Bewehrung vorhanden ist, weshalb die Festigkeit des erfindungsgemäßen Turmbauwerks erhöht wird.

Eine Verbindung mit stahlbaumäßigen Einbauteilen in den Bereichen, wo die aus dem Stand der Technik bekannten ringförmig gekrümmten Fertigteile aus Transportgründen geteilt bzw. halbiert oder gedrittelt werden müssen, ist besonders vorteilhaft bei der Errichtung eines Turmbauwerks im Rahmen der Erfindung nicht erforderlich.

Die Bezeichnung einer horizontalen bzw. vertikalen Lage, wie sie in der vorliegenden Anmeldung beispielsweise für Innenfugen, Außenfugen oder die Bewehrung verwendet wird, bezieht sich durchgehend jeweils auf die Lage und Anordnung am fertig errichteten, im Wesentlichen senkrechten Turmbauwerk.

Vorteilhaft ist die Bewehrung, welche die vertikalen Innenfugen bzw. die vertikalen Außenfugen kreuzt, unter einem Kreuzungswinkel von 90° bis 45° in Bezug auf die vertikalen Gebäudefugen angeordnet. Vorzugsweise beträgt der Kreuzungswinkel zwischen den vertikalen Innenfugen bzw. den vertikalen Außenfugen und der diese Gebäudefugen kreuzenden Bewehrung im Wesentlichen 90°. In diesem Fall ist die Bewehrung, die die vertikalen Gebäudefugen kreuzt, im Wesentlichen horizontal angeordnet.

Ebenso ist die Bewehrung, welche die horizontalen Innenfugen bzw. die horizontalen Außenfugen kreuzt, vorteilhaft unter einem Kreuzungswinkel von 90° bis 45° in Bezug auf die horizontalen Gebäudefugen angeordnet. Vorzugsweise beträgt der Kreuzungswinkel zwischen den horizontalen Innenfugen bzw. den horizontalen Außenfugen und der diese Gebäudefugen kreuzenden Bewehrung im Wesentlichen 90°. In diesem Fall ist die Bewehrung, die die horizontalen Gebäudefugen kreuzt, im Wesentlichen vertikal angeordnet.

In einer besonders vorteilhaften Verfahrensvariante zur Herstellung eines erfindungsgemäßen Turmbauwerks erfolgt die Sicherung der aufgestellten Doppelwandelemente gegen ein Umfallen im Bauzustand dadurch, dass
- die Doppelwandelemente am Boden auf einem ebenen Vormontageplatz in vertikaler oder leicht geneigter Lage aufgestellt werden,
- die Doppelwandelemente durch temporäre Abstützungen in ihrer aufgestellten Lage gehalten werden,
- die Doppelwandelemente so ausgerichtet werden, dass die Unterkanten der Außenplatten sowie der Innenplatten jeweils in einer horizontalen Ebene liegen,
- die Doppelwandelemente kraftschlüssig miteinander zu einem Flächentragwerk verbunden werden,
- anschließend die temporären Abstützungen entfernt werden,
- das Flächentragwerk aus miteinander verbundenen Doppelwandelementen angehoben wird,
- das Flächentragwerk auf einem Umfang des zuletzt errichteten Bauabschnitts des Turmbauwerks abgesetzt wird und abschließend
- lagegenau ausgerichtet wird.

Vorteilhaft ist im Vergleich zu den bekannten Verfahren zur Herstellung von Turmbauwerken mit einer Kletter- oder Gleitschalung beim erfindungsgemäßen Verfahren der Anteil an Bewehrungsarbeiten entlang der Höhe des Turmbauwerks geringer, weil der überwiegende Anteil der Bewehrung in den Doppelwandelementen angeordnet ist. Bei einer Vormontage von ganzen Flächentragwerken auf dem Vormontageplatz finden vorteilhaft keine Bewehrungsarbeiten in großer Höhe statt und somit sind die Errichtungsarbeiten eines erfindungsgemäßen Turmbauwerks besonders sicher und vergleichsweise kostengünstig.

Beim erfindungsgemäßen Verfahren zur Herstellung eines Turmbauwerks erfolgt die Sicherung der Doppelwandelemente gegen ein Umfallen nach dem Aufstellen auf dem Umfang des zuletzt gebauten Abschnitts des Turmbauwerks durch eine Befestigung an Schienen einer Kletterschalung. Im Gegensatz zu aus dem Stand der Technik bekannten Verfahren muss somit nicht auf die Erhärtung des Ortbetons zur Belastung der Befestigungselemente für die vorrückende Kletterschalung gewartet werden.

In einer besonders vorteilhaften Variante eines erfindungsgemäßen Verfahrens zur Herstellung eines Turmbauwerks werden die Doppelwandelemente so aufgestellt, dass eine Fugenbreite der vertikalen Außenfugen und/oder der vertikalen Innenfugen zwischen benachbarten Doppelwandelementen von 5 mm bis 400 mm, bevorzugt von 5 mm bis 40 mm, beträgt.

Vorteilhaft lassen sich vertikale Außenfugen bzw. Innenfugen mit geringer Fugenbreite besonders einfach und zuverlässig verschließen. Gleichzeitig bietet die erfindungsgemäße Anordnung von Doppelwandelementen zu einem polygonalen, beispielsweise sechseckigen, achteckigen oder zwölfeckigen Querschnitt des Turmbauwerks den Vorteil, dass geringe Fugenbreiten für einen Spannungs- und Dehnungsausgleich zwischen benachbarten Doppelwandelementen ausreichen.

In einer vorteilhaften Weiterbildung eines erfindungsgemäßen Verfahrens zur Herstellung eines Turmbauwerks werden die vertikalen Außenfugen und/oder die vertikalen Innenfugen mit einem Vergussmörtel verfüllt. Als Vergussmörtel werden herkömmliche Mörtelqualitäten verwendet. Erforderlichenfalls erfolgt das Füllen der vertikalen Außenfugen und/oder der vertikalen Innenfugen unter Einsatz von Schalelementen. Zweckmäßig werden bei einem Herstellungsverfahren gemäß der Erfindung die Doppelwandelemente so aufgestellt, dass eine Fugenbreite der vertikalen Außenfugen und/oder der vertikalen Innenfugen zwischen benachbarten Doppelwandelementen mit Schalelementen geschlossen werden und das Verfüllen der vertikalen Außenfugen und/oder der vertikalen Innenfugen gleichzeitig mit dem Verfüllen der Doppelwandelemente mit Füllbeton erfolgt.

Von Vorteil sind bei einem erfindungsgemäßen Herstellungsverfahren die Arbeitsbühne und die Schalelemente für die vertikalen Außenfugen und/oder die vertikalen Innenfugen auf einer Kletterschalung montiert und Befestigungselemente für die Kletterschalung sind in den Doppelwandelementen angeordnet. Somit ist besonders vorteilhaft ein schneller Baufortschritt möglich, weil die Befestigungselemente der Kletterschalung in den Doppelwandelementen angeordnet sind. Im Gegensatz zu aus dem Stand der Technik bekannten Verfahren muss nicht auf die Erhärtung des Ortbetons zur Belastung der Befestigungselemente für die vorrückende Kletterschalung gewartet werden. Die Lasten aus dem Eigengewicht der Kletterschalung, aus der Belastung von Arbeitsbühnen und aus Windkräften werden über die Befestigungselemente in einen bereits ausgehärteten Beton der vorgefertigten Doppelwandelemente eingeleitet.

Zweckmäßig werden bei einem erfindungsgemäßen Verfahren zur Herstellung eines Turmbauwerks die Doppelwandelemente bei der Montage auf dem vorhergehenden Bauabschnitt des Turmbauwerks auf einer Schicht aus Epoxidharz aufgestellt und dabei werden die horizontalen Außenfugen zwischen übereinander gestellten Außenplatten und/oder die horizontalen Innenfugen zwischen übereinander gestellten Innenplatten durch die Schicht aus Epoxidharz geschlossen. Epoxidharz zum Verschließen der horizontalen Fugen bietet den Vorteil, dass damit ein besonders robustes Fugenmaterial mit hohem Elastizitäts-Modul und hoher Zugfestigkeit eingesetzt wird.

In einer besonders vorteilhaften Variante eines Herstellungsverfahrens gemäß der Erfindung werden die Doppelwandelemente bei der Montage direkt auf dem vorhergehenden Bauabschnitt des Turmbauwerks aufgestellt und die horizontalen Außenfugen und/oder horizontalen Innenfugen werden als trockene Fugen ausgebildet.

Vorteilhaft werden in einer weiteren alternativen Ausführung eines erfindungsgemäßen Verfahrens zur Herstellung eines Turmbauwerks die Doppelwandelemente bei der Montage auf dem vorhergehenden Bauabschnitt des Turmbauwerks auf Distanzhaltern aufgestellt, wobei die horizontalen Außenfugen und/oder horizontalen Innenfugen mit Schalelementen geschlossen werden und das Verfüllen der horizontalen Außenfugen und/oder horizontalen Innenfugen mit Vergussmörtel erfolgt. Die Distanzhalter bieten den Vorteil, dass Unebenheiten an den Oberkanten der Doppelwandelemente oder geringfügige Abweichungen von der horizontalen Lage der Oberkanten der bereits im vorhergehenden Bauabschnitt errichteten Doppelwandelemente im laufenden Bauabschnitt ausgeglichen werden können.

In einer weiteren bevorzugten Ausführungsvariante eines erfindungsgemäßen Herstellungsverfahrens werden die Doppelwandelemente bei der Montage auf dem vorhergehenden Bauabschnitt des Turmbauwerks auf Distanzhaltern mit einer Höhe von 20 mm bis 50 mm aufgestellt, anschließend werden die horizontalen Außenfugen und/oder Innenfugen mit Schalelementen geschlossen und das Verfüllen der horizontalen Außenfugen und/oder Innenfugen erfolgt gleichzeitig mit dem Verfüllen der Doppelwandelemente mit Beton. In dieser Herstellungsvariante werden die Distanzhalter nach dem Einstellen bzw. Ausgleichen von Niveauunterschieden zwischen dem vorhergehenden und dem laufenden Bauabschnitt in den horizontalen Innen- und/oder Außenfugen mit Beton vergossen und somit wird die Last der darüberliegenden Wandelemente gleichmäßig entlang des gesamten Bauwerksquerschnitts verteilt.

Zweckmäßig ist eine weitere erfindungsgemäße Variante eines Verfahrens zur Herstellung eines Turmbauwerks durch eine Abfolge der folgenden Montageschritte bei der Montage der Doppelwandelemente auf dem Vormontageplatz gekennzeichnet:
- in einem ersten Schritt werden nur die vertikalen Außenfugen zwischen den Außenplatten geschlossen und zwischen den Innenplatten verbleiben offene vertikale Innenfugen,
- in einem zweiten Schritt wird im Bereich der vertikalen Außenfugen zwischen den Außenplatten bzw. der vertikalen Innenfugen zwischen den Innenplatten eine Bewehrung, welche die vertikalen Außenfugen sowie die vertikalen Innenfugen kreuzt, eingebaut,
- die Doppelwandelemente werden im Bereich der vertikalen Außenfugen und der vertikalen Innenfugen kraftschlüssig miteinander verbunden und
- die vertikalen Innenfugen zwischen den Innenplatten werden mit Schalelementen geschlossen.

In einer weiteren Alternative eines erfindungsgemäßen Verfahrens zur Herstellung eines Turmbauwerks werden bei der Montage der Doppelwandelemente auf dem Vormontageplatz vorteilhaft die folgenden Montageschritte befolgt:
- in einem ersten Schritt werden nur die vertikalen Innenfugen zwischen den Innenplatten geschlossen und die vertikalen Außenfugen zwischen den Außenplatten verbleiben offen,
- in einem zweiten Schritt wird im Bereich der vertikalen Außenfugen zwischen den Außenplatten bzw. der vertikalen Innenfugen zwischen den Innenplatten eine Bewehrung, welche die vertikalen Außenfugen sowie die vertikalen Innenfugen kreuzt, eingebaut,
- die Doppelwandelemente werden im Bereich der vertikalen Außenfugen und der vertikalen Innenfugen kraftschlüssig miteinander verbunden und
- die vertikalen Außenfugen zwischen den Außenplatten werden mit Schalelementen geschlossen.

Zweckmäßig ist in einer weiteren Variante des Herstellungsverfahrens gemäß der Erfindung bei der Montage der Doppelwandelemente auf dem vorhergehenden Bauabschnitt eine Abfolge der folgenden Montageschritte zu beachten:
- in einem ersten Schritt werden nur die Außenplatten an ihren Unterkanten auf dem vorhergehenden Bauabschnitt jeweils über die horizontale Außenfuge aufgelagert und zwischen den Innenplatten und dem vorhergehenden Bauabschnitt verbleibt eine offene horizontale Innenfuge,
- eine Kontrolle der Auflagerung der Doppelwandelemente entlang des Umfangs erfolgt über die offene horizontale Innenfuge,
- anschließend werden allenfalls zusätzlich erforderliche Abdichtungsmaßnahmen der horizontalen Außenfuge durchgeführt und
- die horizontale Innenfuge wird mit Schalelementen verschlossen.

Vorteilhaft sind in einer weiteren bevorzugten Verfahrensvariante zur Herstellung eines Turmbauwerks bei der Montage der Doppelwandelemente auf dem vorhergehenden Bauabschnitt die folgenden Montageschritte zu befolgen:
- in einem ersten Schritt werden nur die Innenplatten an ihren Unterkanten auf dem vorhergehenden Bauabschnitt jeweils über die horizontale Innenfuge aufgelagert und zwischen den Außenplatten und dem vorhergehenden Bauabschnitt verbleibt eine offene horizontale Außenfuge,
- eine Kontrolle der Auflagerung der Doppelwandelemente entlang des Umfangs erfolgt über die offene horizontale Außenfuge,
- allenfalls werden zusätzlich erforderliche Abdichtungsmaßnahmen der horizontalen Innenfuge durchgeführt und
- die horizontale Außenfuge wird mit Schalelementen verschlossen.

Von Vorteil werden gemäß einer weiteren erfindungsgemäßen Verfahrensvariante zur Herstellung eines Turmbauwerks die horizontalen Außenfugen und/oder die horizontalen Innenfugen der zu einem Flächentragwerk zusammengefügten Doppelwandelemente auf dem Vormontageplatz durch Schleifen, Fräsen oder einen Höhenausgleich mit Vergussmörtel so behandelt, dass im Wesentlichen alle Punkte der oberen und unteren horizontalen Außenfugen und/oder der oberen und unteren horizontalen Innenfugen in zwei horizontalen Ebenen, die zueinander einen konstanten Abstand einer Bauabschnittshöhe aufweisen, liegen. In dieser Ausführung werden jeweils die horizontalen Außenfugen und/oder Innenfugen der zusammengefügten Doppelwandelemente nachbearbeitet, um einen im Wesentlichen ebenen Verlauf der horizontalen Fugen zu erzielen und somit mögliche Unebenheiten im horizontalen Fugenverlauf der Doppelwandelemente auszugleichen. Ein nächstes Flächentragwerk des darauffolgenden Bauabschnitts kann somit besonders einfach und passgenau auf den ebenen Fugenverlauf der Oberkanten des vorigen Bauabschnitts aufgesetzt werden.

Vorteilhaft bestehen bei einem erfindungsgemäßen Verfahren zur Herstellung eines Turmbauwerks die Außenplatten der Doppelwandelemente aus einem eingefärbten Beton. Somit lassen sich erfindungsgemäße Turmbauwerke mit farblich gestalteten Außenplatten errichten. Beispielsweise ist es im Rahmen der Erfindung denkbar, einzelne Höhenabschnitte des Turmbauwerks mit eingefärbten Doppelwandelementen in unterschiedlichen Farben zu gestalten.

In einer bevorzugten Weiterbildung der Erfindung beträgt bei einem Verfahren zur Herstellung eines Turmbauwerks eine Höhe eines Doppelwandelements im Montagezustand von 2 m bis 15 m. Somit können zu einem Flächentragwerk zusammengefügte Doppelwandelemente mit einer Montagehöhe von beispielsweise 13 m als ein Bauabschnitt des Turmbauwerks errichtet werden, wodurch eine besonders rasche Bauweise ermöglicht wird.

Die Zylinderdruckfestigkeit des Betons im ausgehärteten Zustand kann zwischen 20 MPa und 200 MPa betragen. Zur Herstellung der Doppelwandelemente kann wahlweise normalfester Beton mit einer Zylinderdruckfestigkeit von 20MPa bis 50MPa, hochfester Beton mit einer Zylinderdruckfestigkeit von 50MPa bis 100 MPa sowie ultrahochfester Beton mit Zylinderdruckfestigkeiten von 100MPa bis 200MPa verwendet werden.

Die Dicken der Außenplatten und der Innenplatten der Doppelwandelemente liegen beispielhaft üblicherweise zwischen 50 mm und 70 mm. Bei Verwendung von hochfestem oder ultrahochfestem Beton können die Plattendicken entsprechend verringert werden.

Weitere Einzelheiten, Merkmale und Vorteile der Erfindung ergeben sich aus der nachfolgenden Erläuterung von in den Zeichnungen Fig. 1 bis Fig. 21 schematisch dargestellten Ausführungsbeispielen. In den Zeichnungen zeigen:
- Fig. 1 einen vertikalen Schnitt einer ersten erfindungsgemäßen Ausführungsform eines Turmbauwerks gemäß der jeweils in Fig. 2 und Fig. 3 eingezeichneten Schnittebene I-I während der Herstellung mit Doppelwandelementen und Kletterschalung;
- Fig. 2 einen horizontalen Schnitt der ersten Ausführungsform gemäß der in Fig. 1 eingezeichneten Schnittebene II-II nach dem Einbringen des Füllbetons;
- Fig. 3 einen horizontalen Schnitt der ersten Ausführungsform gemäß der in Fig. 1 eingezeichneten Schnittebene III-III während der Montage der Doppelwandelemente;
- Fig. 4 das in Fig. 1 dargestellte Detail A;
- Fig. 5 einen Schnitt einer zweiten erfindungsgemäßen Ausführungsform während der Montage der zu einem Flächentragewerk verbundenen Doppelwandelemente;
- Fig. 6 einen horizontalen Schnitt der zweiten Ausführungsform gemäß der in Fig. 5 eingezeichneten Schnittebene VI-VI während der Kranmontage;
- Fig. 7 das Detail B von Fig. 5;
- Fig. 8 das Detail C von Fig. 6;
- Fig. 9 einen horizontalen Schnitt entsprechend Fig. 5 mit einer geänderten Ausführungsform der vertikalen Fuge zwischen den Innenplatten;
- Fig. 10 einen Schnitt einer dritten erfindungsgemäßen Ausführungsform gemäß der in Fig. 11 skizzierten Schnittebene X-X;
- Fig. 11 einen Horizontalschnitt der dritten Ausführungsform gemäß der in Fig. 10 eingezeichneten Schnittebene XI-XI;
- Fig. 12 einen Schnitt einer vierten erfindungsgemäßen Ausführungsform während der Kranmontage gemäß der in Fig. 13 skizzieren Schnittebene XII-XII;
- Fig. 13 einen Horizontalschnitt der vierten Ausführungsform gemäß der in Fig. 12 eingezeichneten Schnittebene XIII-XIII;
- Fig. 14 einen Horizontalschnitt der vierten Ausführungsform gemäß der in Fig. 12 eingezeichneten Schnittebene XIV-XIV;
- Fig. 15 einen Vertikalschnitt gemäß der in Fig. 14 eingezeichneten Schnittebene XV-XV;
- Fig. 16 einen der Fig. 15 entsprechenden Vertikalschnitt nach dem Absetzen des darüberliegenden Flächentragwerks;
- Fig. 17 das in Fig. 15 dargestellte Detail D;
- Fig. 18 ein der Fig. 17 entsprechendes Detail mit einer geänderten Ausführungsform der Vergussfuge;
- Fig. 19 eine Abwicklung der Innenansicht des in Fig. 12 am Kranhaken hängenden Flächentragwerks;
- Fig. 20 einen Schnitt gemäß der in Fig. 19 eingezeichneten Schnittebene XX-XX in vergrößertem Maßstab;
- Fig. 21 eine der Fig. 19 entsprechende Innenansicht eines abgewickelten Flächentragwerks mit einer geänderten Ausführungsform der Bewehrung in Ringrichtung.

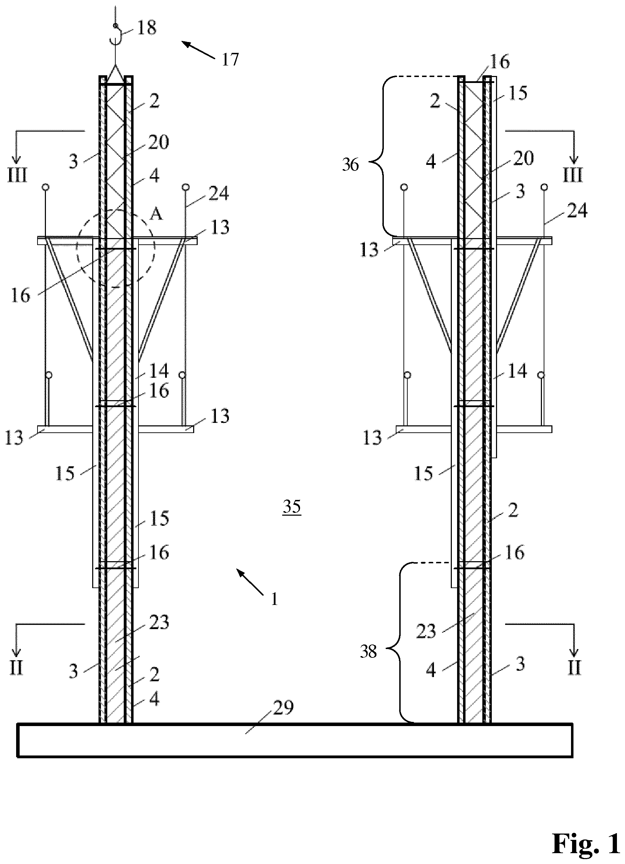

Eine erste erfindungsgemäße Ausführungsform des erfindungsgemäßen Verfahrens ist in den Abbildungen Fig. 1 bis Fig. 4 dargestellt.

Gemäß Fig. 1 werden zur Herstellung eines Bauabschnitts eines Turmbauwerks 1 Doppelwandelemente 2 an einem Kranhaken 18 eines hier nicht dargestellten Krans 17 angehängt und auf dem vorhergehenden Bauabschnitt abgesetzt. Jedes Doppelwandelement 2 besteht aus einer Außenplatte 3 und einer Innenplatte 4, die jeweils mit zwischenliegenden Gitterträgern 20 miteinander verbunden sind. Vor dem Abhängen eines Doppelwandelements 2 vom Kranhaken 18 ist das jeweilige Doppelwandelement 2 gegen Umfallen zu sichern. Im oberen Teil der Fig. 1 wird gezeigt, wie ein Doppelwandelement 2 am Kranhaken 18 hängt und ein zweites Doppelwandelement 2 bereits durch eine Befestigung an seitlich angeordneten Schienen 15 einer Kletterschalung 14 gegen unbeabsichtigtes Umfallen im Bauzustand gesichert ist.

Die Kletterschalung 14 kann beispielsweise als selbstkletterndes Schalungssystem ausgeführt werden. Üblicherweise weist eine Kletterschalung 14 eine oder mehrere Arbeitsbühnen 13 auf, die die erforderlichen Arbeiten zur Positionierung der Schalung und zum Einbringen des Betons ermöglichen. Die Kletterschalung 14 ist mit Befestigungselementen 16 an den vorhergehenden Bauabschnitten befestigt. Die Befestigungselemente 16 sind in den Doppelwandelementen 2 eingebaut. Dies hat den Vorteil, dass die Lasten aus dem Eigengewicht der Kletterschalung 14, aus der Belastung der Arbeitsbühnen 13 und aus Windkräften über die Befestigungselemente 16 in einen bereits ausgehärteten Beton der vorgefertigten Doppelwandelemente 2 eingeleitet werden. Der Baufortschritt wird deshalb nicht durch die bei üblichen Kletterschalungseinsätzen erforderlichen Wartezeiten zur Aushärtung des Betons im vorhergehenden Bauabschnitt beeinträchtigt. Eine Bauabschnittshöhe 36 entspricht hier im Wesentlichen einer Bauhöhe 38 eines Doppelwandelements 2.

Im Inneren des Turmbauwerks 1 ist in der Schnittansicht von Fig. 1 ein Hohlraum 35 zu sehen. Eine waagrechte Fundamentplatte 29 dient zur Begründung des Turmbauwerks 1. Auf der hier gezeigten Arbeitsbühne 13 sind zur Absicherung der Bauarbeiter entsprechende Absturzsicherungen 24 angebracht.

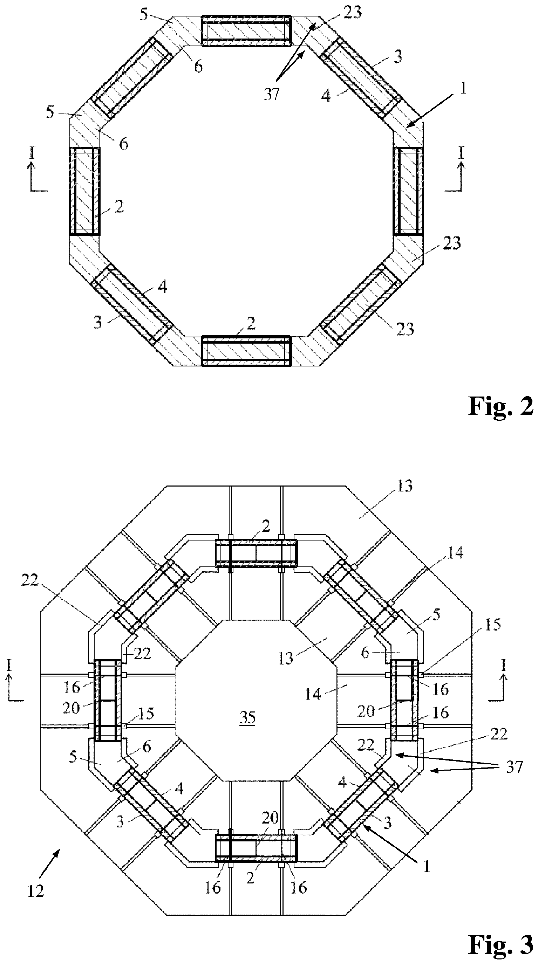

In Fig. 2 ist ein horizontaler Schnitt durch einen der vorhergehenden Bauabschnitte der ersten Ausführungsform gemäß der in Fig. 1 eingezeichneten Schnittebene II-II nach dem Einbringen des Füllbetons 23 dargestellt. Es werden hier beispielsweise acht Doppelwandelemente 2 gezeigt, welche bereits mit Füllbeton 23 zwischen den Außenplatten 3 und Innenplatten 4 verfüllt sind. Die angrenzenden Doppelwandelemente 2 weisen vertikale Außenfugen 5 und vertikale Innenfugen 6 jeweils mit einer Fugenbreite 37 auf und ergeben im Horizontalschnitt eine achteckige Form durch das Turmbauwerk 1. In Fig. 2 sind Gitterträger 20 und eine Bewehrung des Füllbetons 23 zwischen den Außenplatten 3 und den Innenplatten 4 der Doppelwandelemente 2 der Übersichtlichkeit halber nicht dargestellt.

In Fig. 3, welche einen horizontalen Schnitt der ersten Ausführungsform gemäß der in Fig. 1 eingezeichneten Schnittebene III-III während der Montage der Doppelwandelemente 2 zeigt, sind die entlang eines Umfangs 12 des Turmbauwerks 1 aufgestellten Doppelwandelemente 2 dargestellt. Wie der Schnittansicht von Fig. 1 entnommen werden kann, hängt eines der Doppelwandelemente 2 noch am Kranhaken 18. Die übrigen Doppelwandelemente 2 sind durch die Schienen 15 der Kletterschalung 14 bereits gegen ein unbeabsichtigtes Umfallen gesichert. Die Außenplatten 3 und die Innenplatten 4 sind jeweils mit Gitterträgern 20 miteinander verbunden. Die vertikalen Außenfugen 5 und die vertikalen Innenfugen 6 zwischen den Doppelwandelementen 2 sind jeweils mit Schalelementen 22 eingeschalt. Die Arbeitsbühnen 13 sind bei diesem Beispiel an den Innen- und Außenseiten des Turmbauwerks 1 angeordnet. Die Befestigungselemente 16 für die Schienen 15 der Kletterschalung 14 sind in den Doppelwandelementen 2 angeordnet.

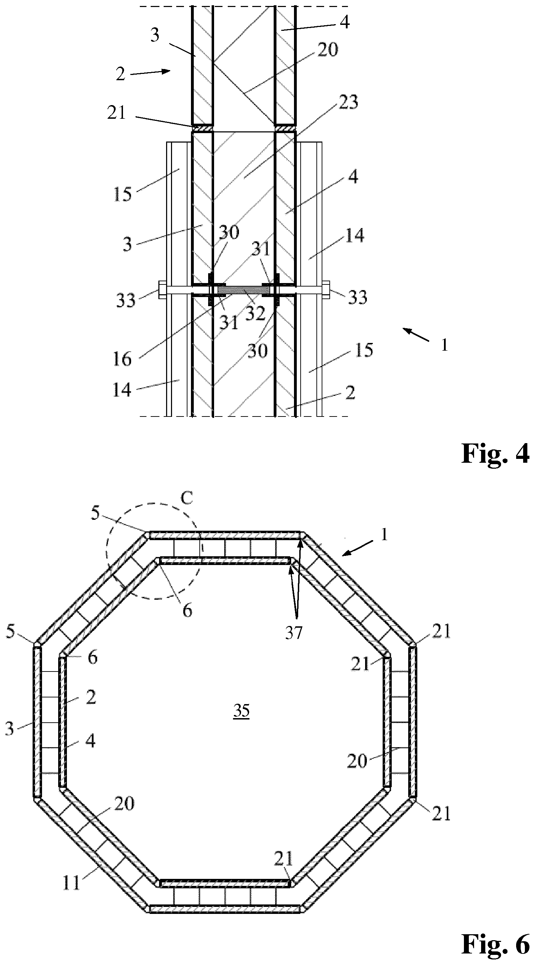

Gemäß Fig. 4, welche das Detail A von Fig. 1 vergrößert zeigt, kann ein Befestigungselement 16 zur Befestigung der Schienen 15 der Kletterschalung 14 am Turmbauwerk 1 beispielsweise aus zwei Hülsen 31 mit Innengewinde und einem dazwischen liegenden Ankerstab 32 bestehen. Zur besseren Verankerung der Hülsen 31 in der Außenplatte 3 und der Innenplatte 4 kann auf die Hülse 31 eine Kreisringplatte 30 aufgeschweißt werden. Die Hülsen 31 mit Kreisringplatte 30 und Ankerstab 32 werden bereits bei der Herstellung der Doppelwandelemente 2 eingebaut. Die Hülsen 31 werden bei der Herstellung mit einem Stopfen abgedichtet, um ein Eindringen des Betons beim Herstellen der Doppelwandelemente 2 zu verhindern. Vor der Befestigung der Schiene 15 mittels einer Schraube 33 ist dieser Stopfen zu entfernen.

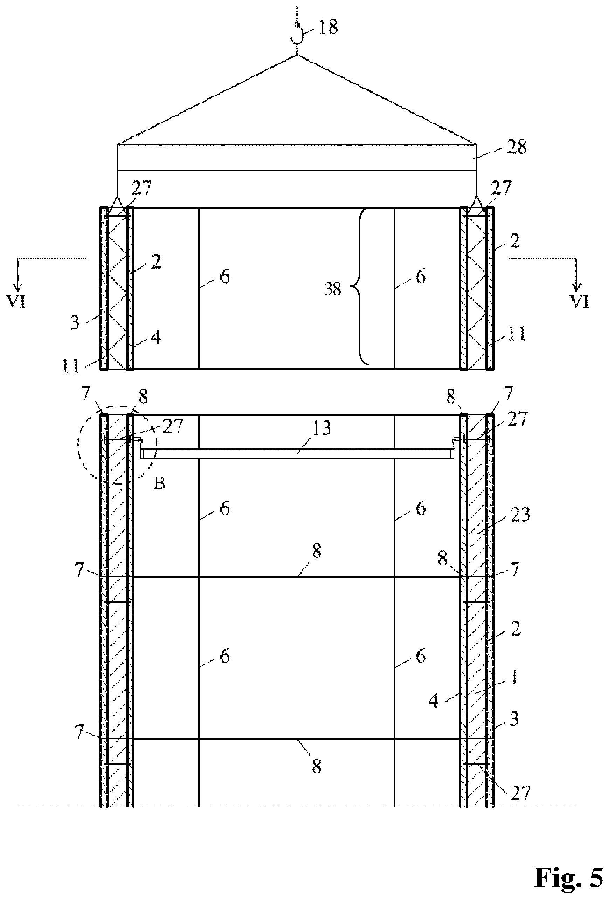

Eine zweite Ausführungsvariante des erfindungsgemäßen Verfahrens ist in den Fig. 5 bis Fig. 9 dargestellt.

Zur Herstellung eines Bauabschnitts des Turmbauwerks 1 werden gemäß Fig. 5 beispielsweise acht miteinander verbundene Doppelwandelemente 2, die durch die Verbindung zu einem gemeinsamen Flächentragwerk 11 zusammengefügt sind, über eine Traverse 28 an einen Kranhaken 18 angehängt und gemeinsam auf den vorhergehenden Bauabschnitt abgesetzt.

Das Zusammenfügen von mehreren Doppelwandelementen 2 auf einem Vormontageplatz, der in der Nähe der Aufstandsfläche des Turmbauwerks 1 situiert ist, ist vorteilhaft, weil viele Arbeitsschritte zur Herstellung des Turmbauwerks 1 dadurch am Boden ausgeführt werden können und die Anzahl der Kranhübe reduziert wird.

In den Doppelwandelementen 2 sind Befestigungselemente 27 eingebaut, die in die Außenplatten 3 und die Innenplatten 4 einbinden. An diesen Befestigungselementen 27 ist eine Arbeitsbühne 13 abgehängt. Bei dem Beispiel der zweiten Ausführungsform ist die Arbeitsbühne 13 nur auf der Innenseite des Turmbauwerks 1 angeordnet. Das hat den Vorteil, dass keine zusätzlichen Vorkehrungen zur Sicherung des Arbeitspersonals gegen ein Abstürzen getroffen werden müssen.

Bei diesem Beispiel werden die horizontalen Außenfugen 7 und die horizontalen Innenfugen 8 jedes Flächentragwerkselements 11 bereits auf dem Vormontageplatz durch Abschleifen so vorbehandelt, dass im Wesentlichen alle Punkte der horizontalen Fugen 7, 8 an den Oberkanten bzw. den Unterkanten der acht miteinander verbundenen Doppelwandelemente 2 in jeweils einer Ebene liegen. Somit kann ein Absetzen des Flächentragwerkselements 11 auf dem vorhergehenden Bauabschnitt ohne sonst zum Ausgleich von Bautoleranzen erforderlichen Ausgleichsmassen in den horizontalen Fugen 7, 8 erfolgen. Durch die Vorbehandlung der planen horizontalen Außenfugen 7 und horizontalen Innenfugen 8 sowohl des jeweils vorhergehenden Bauabschnitts, als auch des gerade am Kranhaken 18 hängenden Flächentragwerkselements 11 können die einzelnen vorgefertigten Bauteile besonders rasch und mit hoher Präzision übereinander gefügt werden. Die Ausführung einer derartigen Bauteilfuge wird als trockene Fuge bezeichnet.

Fig. 6 stellt einen Horizontalschnitt durch das Flächentragwerkselement 11 gemäß der in Fig. 5 eingezeichneten Schnittebene VI-VI dar. Darin wird gezeigt, dass die vertikalen Außenfugen 5 zwischen den Außenplatten 3 und die vertikalen Innenfugen 6 zwischen den Innenplatten 4 der Doppelwandelemente 2 mit Vergussmörtel 21 verfüllt sind. Eine Bewehrung aus Betonstahl ist in Fig. 6 der Übersichtlichkeit halber nicht dargestellt.

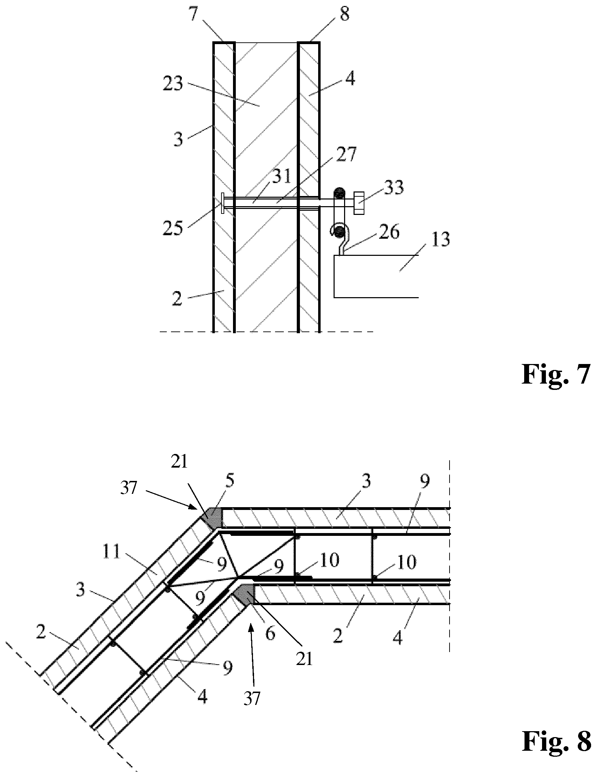

In Fig. 7, welche eine Vergrößerung von Detail B aus Fig. 5 zeigt, wird eine weitere mögliche Ausführungsform der Befestigungselemente 27 zur Befestigung einer Arbeitsbühne 13 dargestellt. Hülsen mit Innengewinde 31 werden bei der Herstellung der Doppelwandelemente 2 in die Außenplatten 3 und die Innenplatten 4 eingebaut und mittels einer Ankerplatte 25 gegen Herausziehen gesichert. Die Arbeitsbühne 13 wird mit einer Schraube 33 und einer Abhängung 26 am Befestigungselement 27 befestigt.

In Fig. 8 ist gemäß Detail C von Fig. 6 dargestellt, wie zwei Doppelwandelemente 2 durch Füllen der vertikalen Außenfuge 5 zwischen den Außenplatten 3 sowie der vertikalen Innenfuge 6 zwischen den Innenplatten 4 mit Vergussmörtel 21 und durch Verschweißen der Bewehrung 9, welche Bewehrung 9 die vertikale Außenfuge 5 sowie die vertikale Innenfuge 6 kreuzt und hier im Wesentlichen horizontal angeordnet ist, miteinander verbunden werden. Ein Kreuzungswinkel zwischen der horizontalen Bewehrung 9 und der vertikalen Außenfuge 5 bzw. der vertikalen Innenfuge 6 beträgt hier im Wesentlichen 90°. Durch das Verfüllen der vertikalen Fugen 5 bzw. 6 und das Verschweißen der hier horizontal angeordneten Bewehrung 9 entsteht eine feste Verbindung, in der Zug- und Druckkräfte, Biegemomente und Schubkräfte zwischen den Doppelwandelementen 2 übertragen werden können. Eine Struktur aus ebenen Elementen, die entlang ihrer Kanten miteinander verbunden sind, wird als Flächentragwerk 11 bezeichnet. Durch Verbinden von Überständen einer Bewehrung 10, welche Bewehrung 10 die horizontale Außenfuge 7 sowie die horizontale Innenfuge 8 kreuzt und hier im Wesentlichen vertikal angeordnet ist, können beispielsweise ebenfalls durch Verschweißen übereinanderliegende Bauabschnitte des Flächentragwerks 11 zusätzlich miteinander besonders fest verbunden werden.

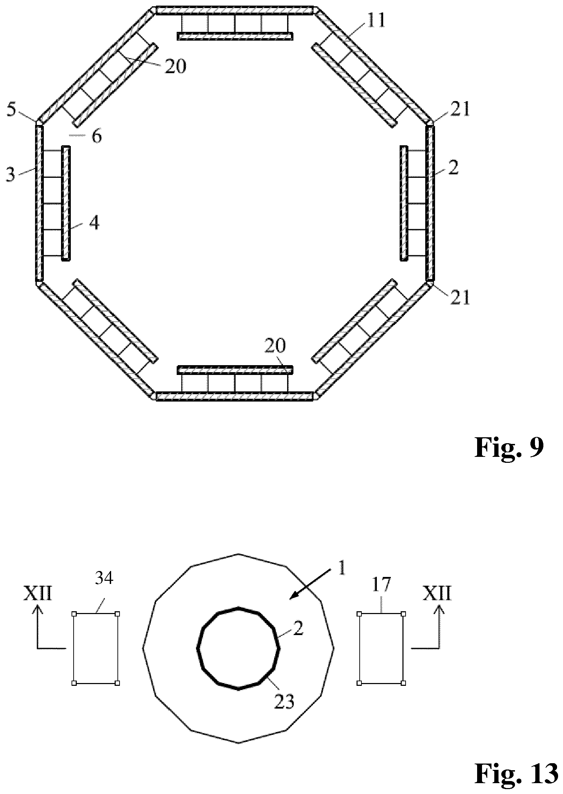

Eine alternative Ausführungsform einer vertikalen Innenfuge 6 zwischen den Innenplatten 4 ist in Fig. 9 dargestellt. Der gegenseitige Abstand der Innenplatten 4 zwischen zwei Doppelwandelementen 2 wird dabei vergrößert, sodass breitere vertikale Innenfugen 6 gebildet werden. Durch die hier im Vergleich zu Fig. 6 breitere Ausführung der vertikalen Innenfugen 6 wird die Herstellung einer steifen Verbindung zwischen den einzelnen Doppelwandelementen 2 vereinfacht. Die vertikale Innenfuge 6 wird nach dem Herstellen der Verbindung zwischen den einzelnen Doppelwandelementen 2 entweder unter Zuhilfenahme von Schalelementen 22 geschlossen oder mit Vergussmörtel 21 verfüllt. Ebenso kann das Füllen der vertikalen Innenfugen 6 mit Vergussmörtel 21 zusätzlich auch den Einsatz von Schalelementen 22 erfordern.

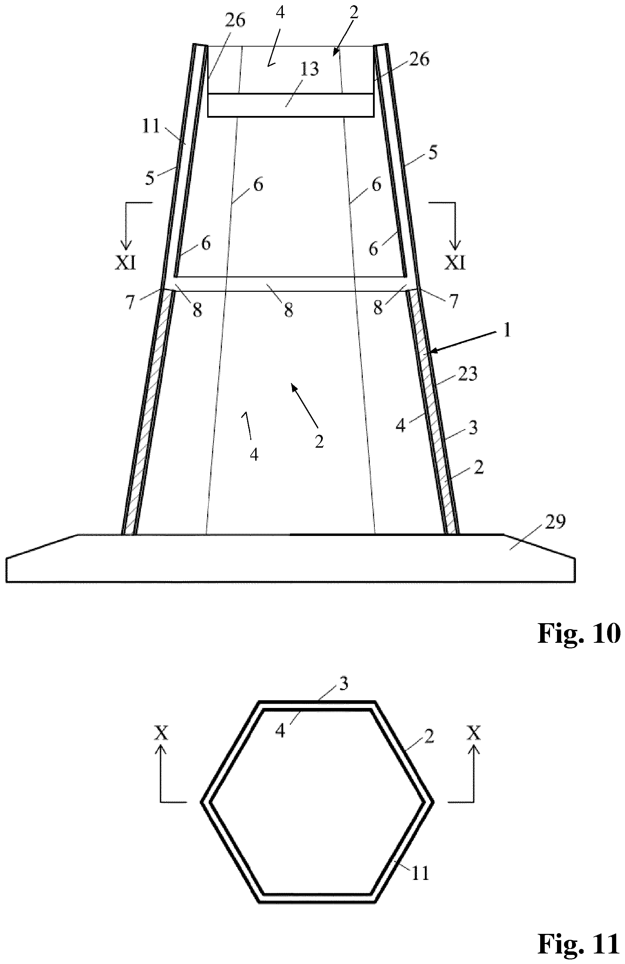

Eine dritte erfindungsgemäße Ausführungsform mit geneigten Doppelwandelementen 2 ist in den Abbildungen Fig. 10 und Fig. 11 dargestellt. Die geneigte Ausführung der Wände des Turmbauwerks 1 erfordert eine trapezförmige Herstellung der Doppelwandelemente 2. Die Arbeitsbühne 13 ist über Abhängungen 26 an den Innenplatten 4 der Doppelwandelemente 2 befestigt. Bei dieser Ausführungsform wird das Eigengewicht des Flächentragwerks 11 nur mehr über die Aufstandsfläche der Außenplatten 3 in der horizontalen Außenfuge 7 auf den vorhergehenden Bauabschnitt übertragen. Die horizontale Innenfuge 8 zwischen den Innenplatten 4 ist mit einer großen Fugenbreite ausgeführt, um eine Inspektion der Auflagerung des Flächentragwerks 11 über die horizontale Außenfuge 7 auf den vorhergehenden Bauabschnitt zu ermöglichen und allenfalls erforderliche zusätzliche Abdichtungsmaßnahmen durchführen zu können. Vor dem Einfüllen des Füllbetons 23 ist die horizontale Innenfuge 8 mit Schalelementen 22 zu schließen.

Fig. 11 ist zu entnehmen, dass diese in Fig. 10 dargestellte Ausführungsform beispielsweise einen sechseckigen Querschnitt aufweist.

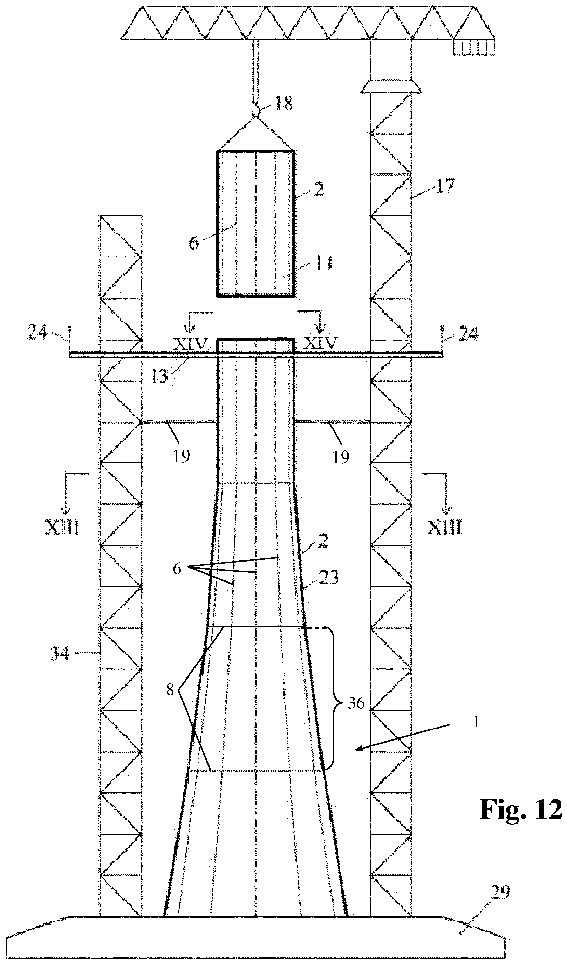

Eine vierte erfindungsgemäße Ausführungsform eines Turmbauwerks 1 mit geneigten und vertikalen Wandabschnitten ist in den Abbildungen Fig. 12 bis Fig. 21 dargestellt. Die Montage der aus Doppelwandelementen 2 zusammengefügten Flächentragwerke 11 erfolgt mit einem Kran 17, der auf dem Fundament 29 befestigt ist. Der Kran 17 und ein Hilfspfeiler 34 sind über Abstrebungen 19 mit dem Turmbauwerk 1 verbunden. In Fig. 12 wird gezeigt, wie ein Flächentragwerk 11 direkt über Zugseile am Kranhaken 18 befestigt ist. Die dabei auftretenden Horizontalkräfte im oberen Teil des Flächentragwerks 11 müssen von den Doppelwandelementen 2 und den vertikalen Fugen 5, 6 übernommen werden. Die Arbeiten zum Verfüllen der horizontalen Fugen 7, 8 und zum Einbringen des Füllbetons 23 werden bei diesem Beispiel von einer außerhalb des Turmbauwerks 1 liegenden Arbeitsbühne 13 durchgeführt. Die Arbeitsbühne 13 mit Absturzsicherungen 24 ist am Kran 17 und am Hilfspfeiler 34 befestigt und wird zur Durchführung der abschnittsweisen Herstellung des Turmbauwerks 1 nach Bedarf angehoben oder abgesenkt.

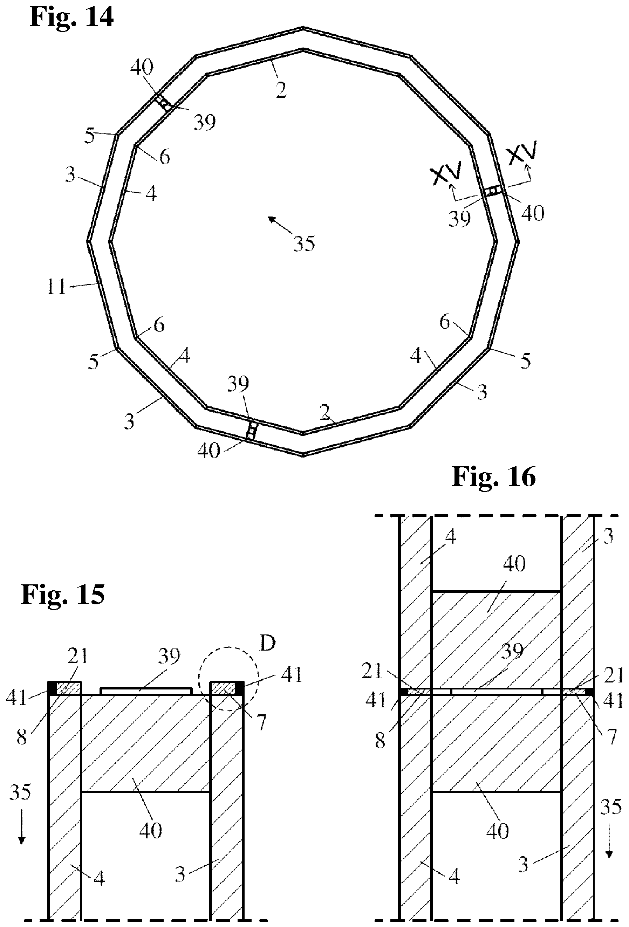

In Fig. 13 und Fig. 14 wird gezeigt, dass die vierte Ausführungsform beispielsweise einen zwölfeckigen Querschnitt aufweist.

In Fig. 14 wird gezeigt, dass bei diesem Ausführungsbeispiel an drei Stellen Querbalken 40 angeordnet sind, die jeweils die Außenplatten 3 und Innenplatten 4 der Doppelwandelemente 2 verbinden. Auf den Querbalken 40 sind Distanzhalter 39 aufgelegt. Die Bewehrungen 9, 10 und die Gitterträger 20 sind der Übersichtlichkeit halber im Querschnitt der Fig. 14 nicht dargestellt. Die Anordnung von drei Querbalken 40 und drei Distanzhaltern 39 ist besonders vorteilhaft, weil mit drei Auflagerpunkten eine statisch bestimmte Lagerung für das darüberliegende Flächentragwerk 11 geschaffen wird. Durch ein Vermessen der Höhen der Oberseiten der Distanzhalter 39 und durch die Auswahl von Distanzhaltern 39 mit geeigneten Dicken können somit drei Auflagerpunkte in einer horizontalen Ebene geschaffen werden.

Fig. 15 zeigt eine mögliche Ausführungsform zur Herstellung der horizontalen Außenfugen 7 und horizontalen Innenfugen 8 des Turmbauwerks 1. Auf der Oberseite der Außenplatten 3 wird auf der Außenseite des Turmbauwerks 1 ein Dichtungsprofil 41 angeordnet. Auf der Oberseite der Innenplatten 4 wird auf der zum Hohlraum 35 zugewandten Seite ein Dichtungsprofil 41 angeordnet. Anschließend wird auf der Oberseite der Außenplatten 3 und der Innenplatten 4 Vergussmörtel 21 so aufgetragen, dass die Höhe des Vergussmörtels größer ist als die Höhe der Distanzhalter 39.

Nach dem Absetzen des darüberliegenden Doppelwandelements 2, wie in Fig. 16 dargestellt ist, werden die Dichtungsprofile 41 gestaucht und der überschüssige Vergussmörtel 21 wird in den Hohlraum zwischen den Außenplatten 3 und den Innenplatten 4 austreten. Die Dichtungsprofile 41 verhindern vorteilhaft ein Austreten des Vergussmörtels 21 auf der Außenseite des Turmbauwerks 1 und auf der dem Hohlraum 35 zugewandten Seite.

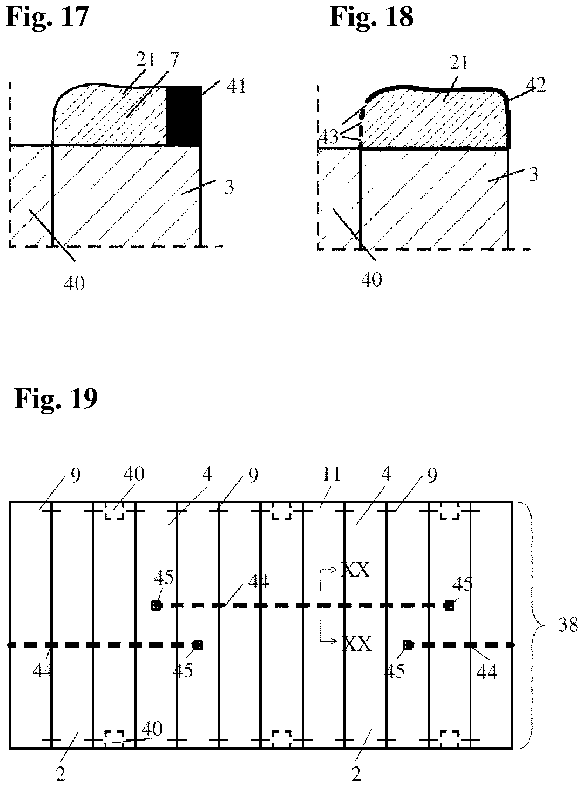

Fig. 17 zeigt, dass das Dichtungsprofil 41 und die Schicht aus Vergussmörtel 21 annähernd die gleiche Höhe bzw. Dicke aufweisen.

Eine geänderte Ausführungsform der horizontalen Vergussfugen 7, 8 ist in Fig. 18 dargestellt. Fig. 18 zeigt ein Dichtungsband 42, das mit Vergussmörtel 21 gefüllt ist. Das Verfüllen des Dichtungsbandes 42 mit Vergussmörtel 21 kann zum Beispiel so erfolgen, dass das Dichtungsband 42 mit einer Breite, die einer zwei- bis dreifachen Dicke der Außenplatte 3 entspricht, auf der Oberseite der Außenplatte 3 aufgelegt wird, der Vergussmörtel aufgetragen wird und die überstehenden Enden des Dichtungsbandes 42 um den Vergussmörtel geschlungen werden.

Fig.18 veranschaulicht, dass das Dichtungsband 42 Öffnungen 43 aufweist, durch die der überschüssige Vergussmörtel 21 beim Absetzen des darüberliegenden Doppelwandelements 2 austreten kann.

Fig. 19 zeigt die Innenansicht einer Abwicklung des Flächentragwerkelements 11, das in Fig. 12 am Kranhaken 18 hängend dargestellt ist. Die Anordnung einer Bewehrung 9 im Bereich der vertikalen Außenfugen 5 und vertikalen Innenfugen 6 im Hohlraum zwischen den Außenplatten 3 und den Innenplatten 4, wobei die Bewehrung 9 die vertikalen Außenfugen 5 bzw. die vertikalen Innenfugen 6 kreuzt und hier im Wesentlichen horizontal angeordnet ist, gewährleistet nach dem Erhärten des Füllbetons 23 gemeinsam mit der in den Doppelwandelementen 2 angeordneten horizontalen Bewehrung eine durchgehende Bewehrung des Turmbauwerks 1 in Ringrichtung. Das Anordnen der Bewehrung 9, die die vertikalen Außenfugen 5 und vertikalen Innenfugen 6 kreuzt und wie hier gezeigt unter einem Kreuzungswinkel von im Wesentlichen 90° zu den vertikalen Außenfugen 5 bzw. den vertikalen Innenfugen 6 angeordnet ist, ist an der Oberseite und an der Unterseite des Flächentragwerks 11 leicht möglich. Eine Möglichkeit zum Einbau der Bewehrung über die gesamte Höhe 38 des Doppelwandelements 2 ist nur möglich, wenn die Breite der vertikalen Außenfuge 5 oder vertikalen Innenfuge 6 so groß ausgeführt wird, dass die Bewehrung 9 eingebaut werden kann. Eine entsprechende Ausbildung der vertikalen Innenfuge 6 ist beispielsweise in Fig. 9 dargestellt.

Fig. 19 zeigt eine besonders vorteilhafte Ausführungsform einer Bewehrung 9, die die vertikalen Außenfugen 5 und die vertikalen Innenfugen 6 kreuzt. Am oberen und unteren Ende des Flächentragwerks 11 wird die hier im Wesentlichen horizontale Bewehrung 9 aus geripptem Betonstahl eingebaut, weil diese Bereiche von oben bzw. von unten zugänglich sind. Ungefähr in der Mitte der Höhe 38 des Doppelwandelements 2 werden zwei horizontale Spannglieder 44 eingebaut. Die Spannglieder 44 haben bei diesem Beispiel eine Länge, die etwas größer ist als der halbe Umfang 12 des Flächentragwerks 11. Alle Doppelwandelemente 2 werden durch ein Anspannen der beiden Spannglieder 44 zu einem Flächentragwerk 11 zusammengefügt. Die Spannglieder 44, die in Hüllrohren 47 eingebaut sind, weisen an jedem der beiden Enden eine Spanngliedverankerung 45 auf.

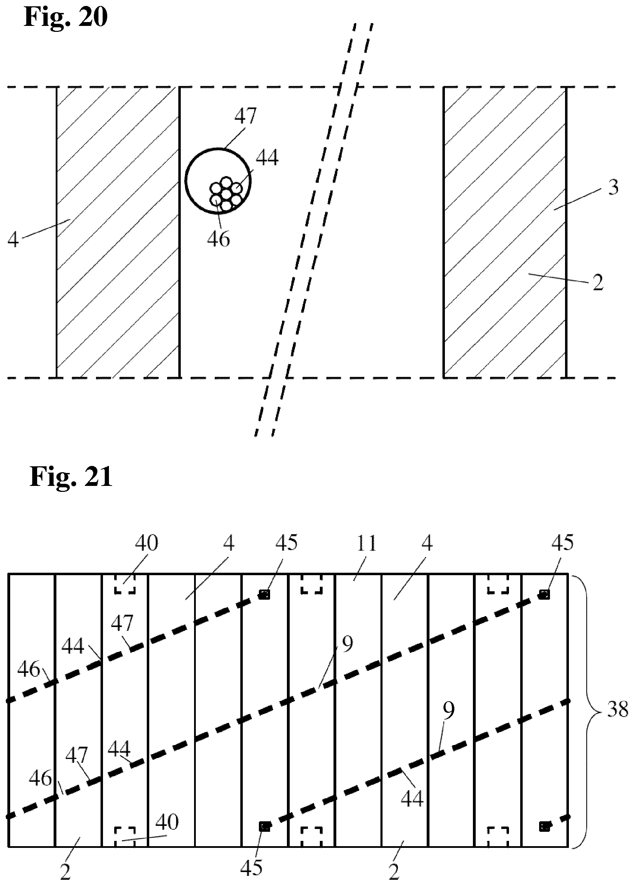

In Fig. 20 wird in einer Schnittansicht eine Ausführungsform gezeigt, bei der das Spanglied 44 aus einer siebendrähtigen Spanndrahtlitze 46, die in einem Hüllrohr 47 angeordnet ist, besteht. Das Spannglied 44 könnte auch aus einer mit einem Kunststoffmantel umhüllten Spanndrahtlitze 46, aus mehreren Spandrahtlitzen 46 oder aus einem Faserverbundwerkstoff bestehen. Das Spannglied 44 ist hier in Fig. 20 im Hohlraum des Doppelwandelements 2 zwischen den Außenplatten 3 und den Innenplatten 4 angeordnet.

Die Hüllrohre 47 und Spanngliedverankerungen 45 werden vorteilhaft bereits bei der Produktion der Doppelwandelemente 2 eingebaut. Nach dem Aufstellen der Doppelwandelemente 2 auf dem Vormontageplatz können die vertikalen Außenfugen 5 und die vertikalen Innenfugen 6 durch ein Anspannen der Spannglieder 44 an den Spanngliedverankerungen 45 geschlossen und abgedichtet werden. Bei einer hohen Herstellungsgenauigkeit der Doppelwandelemente 2 könnte die vertikalen Außenfugen 5 und Innenfugen 6 als trockene Fugen ausgeführt werden. Das Aneinanderdrücken der Doppelwandelemente 2 in den vertikalen Außenfugen 5 und Innenfugen 6 bewirkt außerdem, dass die einzelnen Doppelwandelemente 2 zu einem stabilen Flächentragwerk 11 zusammengefügt werden.

Die Hüllrohre weisen jeweils nur eine Länge auf, welche ungefähr der Breite der Doppelwandelemente 2 entspricht. Die Hüllrohre sind mit einem ausreichend großen Durchmesser auszuführen, dass das Einschieben der Spanndrahtlitzen 46 an den Knickstellen zwischen den Doppelwandelemente 2, die beim zwölfeckigen Ausführungsbeispiel gemäß Fig. 14 jeweils 30° betragen, problemlos funktioniert. Ein trompetenförmiges Aufweiten der Endstücke der Hüllrohre 47, in das die Spanndrahtlitze eingeschoben wird, kann zu einem leichteren Einschieben der Spanndrahtlitzen 46 beitragen. Ein Verpressen der Hüllrohre 47 nach dem Anspannen der Spannglieder 44 ist bei dieser Ausführungsform nicht möglich, weil kein Abdichten der Hüllrohre an den Knickstellen zwischen den Doppelwandelementen 2 durchgeführt werden kann. Beim Einbringen des Füllbetons 23 werden die Hüllrohre teilweise mit Füllbeton 23 gefüllt. Die Verwendung von Füllbeton 23 mit einem kleinen Größtkorn oder zusätzliche Öffnungen im Hüllrohr 47 tragen zu einem hohen Füllungsgrad der Hüllrohre 47 mit Füllbeton 23 bei.

Eine alternative Ausführungsform zur Anordnung der Bewehrung 9 im Flächentragwerk 11 wird in Fig. 21 gezeigt. Die Spannglieder 44 werden in geneigter Lage hergestellt und verlaufen über die gesamte Länge des Umfangs 12 des Turmbauwerks 1. Die Bewehrung 9 kreuzt hier die vertikalen Außenfugen 5 bzw. die vertikalen Innenfugen 6 zwischen den Doppelwandelementen 2 jeweils unter einem Kreuzungswinkel von beispielsweise 70°.

Im Vergleich zu den bekannten Verfahren zur Herstellung von Turmbauwerken mit einer Kletter- oder Gleitschalung weist das erfindungsgemäße Verfahren zumindest die folgenden Vorteile auf:
- Ein schnellerer Baufortschritt ist möglich, weil die Befestigungselemente 16 der Kletterschalung 14 in den Doppelwandelementen 2 angeordnet sind. Es muss daher nicht auf die Erhärtung des Ortbetons zur Belastung der Befestigungselemente 16 für die vorrückende Kletterschalung 14 gewartet werden.
- Der Anteil an Bewehrungsarbeiten entlang der Höhe des Turmbauwerks 1 ist geringer, weil der überwiegende Anteil der statisch erforderlichen Bewehrung in den Doppelwandelementen 2 angeordnet ist. Die Bewehrungen 9 und 10, die im Füllbeton 23 angeordnet sind, machen nur einen vergleichsweise geringen Teil der Gesamtbewehrungsmenge aus. Bei einer Vormontage von ganzen Flächentragwerken 11 auf dem Vormontageplatz finden vorteilhaft keine Bewehrungsarbeiten in großer Höhe statt und somit sind die Errichtungsarbeiten eines erfindungsgemäßen Turmbauwerks 1 vergleichsweise sicher und kostengünstig.
- Der Anteil an Schalungsarbeiten in der Höhe ist geringer, wodurch die Errichtungskosten für ein Turmbauwerk 1 reduziert werden.

Im Vergleich zu den bekannten Verfahren zur Herstellung von Turmbauwerken mit Fertigteilen weist das erfindungsgemäße Verfahren zumindest die folgenden Vorteile auf:
- Es ist keine Herstellung von aufwändigen, oft ringförmigen oder gekrümmten Stahlschalungen erforderlich.
- Die Herstellung von beliebigen Bauteilformen ist ohne zusätzlichen Aufwand für die Herstellung von Stahlschalungen möglich, weil die Geometrie des Turmbauwerks 1 über die Abmessungen der Doppelwandelemente 2 gesteuert wird.
- Es gibt weder horizontale Außenfugen 7 oder horizontale Innenfugen 8 ohne diese kreuzende bzw. durchgehende Bewehrung 10 sowie weder vertikale Außenfugen 5 oder vertikale Innenfugen 6 ohne diese kreuzende bzw. durchgehende Bewehrung 9, weshalb die Festigkeit des erfindungsgemäßen Turmbauwerks vorteilhaft erhöht wird.
- Der Kreuzungswinkel der Bewehrung 9, welche die vertikalen Außenfugen 5 bzw. die vertikalen Innenfugen 6 kreuzt, beträgt von 90° bis 45° in Bezug auf die vertikalen Fugen 5, 6. Vorzugsweise beträgt der Kreuzungswinkel zwischen den vertikalen Außenfugen 5 bzw. den vertikalen Innenfugen 6 und der diese Fugen 5, 6 kreuzenden Bewehrung 9 im Wesentlichen 90°. In diesem Fall ist die Bewehrung 9, welche die vertikalen Fugen 5, 6 kreuzt, im Wesentlichen horizontal angeordnet.
- Der Kreuzungswinkel der Bewehrung 10, welche die horizontalen Außenfugen 7 bzw. die horizontalen Innenfugen 8 kreuzt, beträgt ebenfalls von 90° bis 45° in Bezug auf die horizontalen Fugen 7, 8. Vorzugsweise beträgt der Kreuzungswinkel zwischen den horizontalen Außenfugen 7 bzw. den horizontalen Innenfugen 8 und der diese Fugen 7, 8 kreuzenden Bewehrung 10 im Wesentlichen 90°. In diesem Fall ist die Bewehrung 10, die die horizontalen Fugen 7, 8 kreuzt, im Wesentlichen vertikal angeordnet.
- Es besteht keine Notwendigkeit zur vollständigen Überdrückung der horizontalen Außenfugen 7 oder horizontalen Innenfugen 8 im Grenzzustand der Tragfähigkeit. Daraus resultieren eine geringere Druckbelastung des Betons und damit ein verbessertes Verhalten in Bezug auf Materialermüdung.
- Eine Verbindung mit stahlbaumäßigen Einbauteilen in den Bereichen, wo die aus dem Stand der Technik bekannten ringförmigen Fertigteile aus Transportgründen geteilt bzw. halbiert oder gedrittelt werden müssen, ist vorteilhaft bei der Errichtung eines Turmbauwerks 1 im Rahmen der Erfindung nicht erforderlich.
- Der Aufwand für die Herstellung der horizontalen Außenfugen 7 oder horizontalen Innenfugen 8 ist geringer.
- Der Transport der Fertigteile ist einfacher, weil die Doppelwandelemente 2 ebene Bauteile sein können.
- Die Hubgewichte sind geringer.

In der vorliegenden Beschreibung wird die Ausführung von Turmbauwerken 1 beispielsweise mit sechseckigen, achteckigen und zwölfeckigen Querschnitten beschrieben. Das erfindungsgemäße Verfahren kann jedoch zur Herstellung von beliebigen polygonalen Querschnitten eingesetzt werden.

Weiters wird in der vorliegenden Beschreibung die Ausführung des Turmbauwerks 1 mit Doppelwandelementen 2, die Gitterträger 20 aufweisen, beschrieben. Das erfindungsgemäße Verfahren kann jedoch auch mit anderen Verbindungsmitteln zur Verbindung der Außenplatten 3 und der Innenplatten 4 der Doppelwandelemente 2, beispielweise mit gewellten Stahlblechen oder Kunststoffteilen, eingesetzt werden.

### Liste der Positionszeichen:

- 1: Turmbauwerk
- 2: Doppelwandelement
- 3: Außenplatte des Doppelwandelements
- 4: Innenplatte des Doppelwandelements
- 5: vertikale Außenfuge zwischen nebeneinander gestellten Außenplatten
- 6: vertikale Innenfuge zwischen nebeneinander gestellten Innenplatten
- 7: horizontale Außenfuge zwischen übereinander gestellten Außenplatten
- 8: horizontale Innenfuge zwischen übereinander gestellten Innenplatten
- 9: Bewehrung, die die vertikalen Fugen kreuzt
- 10: Bewehrung, die die horizontalen Fugen kreuzt
- 11: Flächentragwerk
- 12: Umfang des Turmbauwerks
- 13: Arbeitsbühne
- 14: Kletterschalung
- 15: Schiene der Kletterschalung
- 16: Befestigungselement für Kletterschalung
- 17: Kran
- 18: Kranhaken
- 19: Abstrebung zwischen Turmbauwerk und Kran
- 20: Gitterträger
- 21: Vergussmörtel
- 22: Schalelement
- 23: Füllbeton
- 24: Absturzsicherung auf der Arbeitsbühne
- 25: Ankerplatte
- 26: Abhängung, Dreikantleiste
- 27: Befestigungselement für Arbeitsbühne
- 28: Traverse
- 29: Fundament
- 30: Kreisringplatte
- 31: Hülse mit Innengewinde
- 32: Ankerstab
- 33: Schraube
- 34: Hilfspfeiler
- 35: Hohlraum
- 36: Bauabschnittshöhe
- 37: Fugenbreite einer vertikalen Außenfuge oder Innenfuge
- 38: Höhe des Doppelwandelements
- 39: Distanzhalter
- 40: Querbalken
- 41: Dichtungsprofil
- 42: Dichtungsband
- 43: Öffnungen
- 44: Spannglied
- 45: Spanngliedverankerung
- 46: Spanndrahtlitze
- 47: Hüllrohr

## Patentansprüche

1. Verfahren zur Herstellung eines Turmbauwerks (1) aus Stahlbeton mit mindestens einem sich in Längsrichtung erstreckenden Hohlraum (35) im Inneren des Turmbauwerks (1), wobei
- entlang eines Umfangs (12) des Turmbauwerks (1) Doppelwandelemente (2) jeweils umfassend eine Außenplatte (3) sowie eine Innenplatte (4) in vertikaler oder geneigter Lage unter Bildung von vertikalen Außenfugen (5) zwischen benachbarten Außenplatten (3) sowie von vertikalen Innenfugen (6) zwischen benachbarten Innenplatten (4) aufgestellt werden,
- die Doppelwandelemente (2) durch eine Befestigung an Schienen (15) einer Kletterschalung (14) in ihrer nebeneinander aufgestellten Lage gegen ein Umfallen gesichert werden,
- im Bereich der vertikalen Außenfugen (5) sowie der vertikalen Innenfugen (6) zwischen den Außenplatten (3) und den Innenplatten (4) eine Bewehrung (9) eingebaut wird, die die vertikalen Außenfugen (5) und vertikalen Innenfugen (6) kreuzt,
- im Bereich von horizontalen Außenfugen (7) sowie von horizontalen Innenfugen (8) zwischen den Außenplatten (3) und den Innenplatten (4) eine Bewehrung (10) eingebaut wird, die die horizontalen Außenfugen (7) und horizontalen Innenfugen (8) kreuzt,
- die vertikalen Außenfugen (5) und vertikalen Innenfugen (6) zwischen den Doppelwandelementen (2) mit Füllbeton (23), Vergussmörtel (21), Silikon oder einem Abdichtband geschlossen werden,
- eine entlang des Umfangs (12) des Turmbauwerks (1) angeordnete Arbeitsbühne (13) um eine Bauabschnittshöhe (36) angehoben wird,
- die Doppelwandelemente (2) mit Füllbeton (23) gefüllt werden und
- die zuvor angegebenen Schritte zur Herstellung eines Bauabschnitts mit einer Bauabschnittshöhe (36), welche im Wesentlichen einer Höhe (38) der Doppelwandelemente (2) entspricht, so oft wiederholt werden, bis eine gewünschte Gesamthöhe des Turmbauwerks (1) erreicht wird.

2. Verfahren zur Herstellung eines Turmbauwerks (1) nach Anspruch 1, **dadurch gekennzeichnet, dass** die Sicherung der aufgestellten Doppelwandelemente (2) gegen ein Umfallen im Bauzustand dadurch erfolgt, dass
- die Doppelwandelemente (2) am Boden auf einem ebenen Vormontageplatz in vertikaler oder leicht geneigter Lage aufgestellt werden,
- die Doppelwandelemente (2) durch temporäre Abstützungen in ihrer aufgestellten Lage gehalten werden,
- die Doppelwandelemente (2) so ausgerichtet werden, dass die Unterkanten der Außenplatten (3) sowie der Innenplatten (4) jeweils in einer horizontalen Ebene liegen,
- die Doppelwandelemente (2) kraftschlüssig miteinander zu einem Flächentragwerk (11) verbunden werden,
- anschließend die temporären Abstützungen entfernt werden,
- das Flächentragwerk (11) aus miteinander verbundenen Doppelwandelementen (2) angehoben wird,
- das Flächentragwerk (11) auf einem Umfang (12) des zuletzt errichteten Bauabschnitts des Turmbauwerks (1) abgesetzt wird und
- lagegenau ausgerichtet wird.

3. Verfahren zur Herstellung eines Turmbauwerks (1) nach Anspruch 1 oder 2, **dadurch gekennzeichnet, dass** die Doppelwandelemente (2) so aufgestellt werden, dass eine Fugenbreite (37) der vertikalen Außenfugen (5) und/oder der vertikalen Innenfugen (6) zwischen benachbarten Doppelwandelementen (2) von 5 mm bis 400 mm, bevorzugt von 5 mm bis 40 mm, beträgt.

4. Verfahren zur Herstellung eines Turmbauwerks (1) nach Anspruch 3, **dadurch gekennzeichnet, dass** die vertikalen Außenfugen (5) und/oder die vertikalen Innenfugen (6) mit einem Vergussmörtel (21) erforderlichenfalls unter Einsatz von Schalelementen (22) verfüllt werden.

5. Verfahren zur Herstellung eines Turmbauwerks (1) nach einem der Ansprüche 1 bis 3, **dadurch gekennzeichnet, dass** die Doppelwandelemente (2) so aufgestellt werden, dass eine Fugenbreite (37) der vertikalen Außenfugen (5) und/oder der vertikalen Innenfugen (6) zwischen benachbarten Doppelwandelementen (2) mit Schalelementen (22) geschlossen werden und das Verfüllen der vertikalen Außenfugen (5) und/oder vertikalen Innenfugen (6) gleichzeitig mit dem Verfüllen der Doppelwandelemente (2) mit Füllbeton (23) erfolgt.

6. Verfahren zur Herstellung eines Turmbauwerks (1) nach Anspruch 4 oder 5, **dadurch gekennzeichnet, dass** die Arbeitsbühne (13) und die Schalelemente (22) für die vertikalen Außenfugen (5) und/oder vertikalen Innenfugen (6) auf der Kletterschalung (14) montiert sind und Befestigungselemente (16) für die Kletterschalung (14) in den Doppelwandelementen (2) angeordnet sind.

7. Verfahren zur Herstellung eines Turmbauwerks (1) nach einem der Ansprüche 1 bis 6, **dadurch gekennzeichnet, dass** die Doppelwandelemente (2) bei der Montage auf dem vorhergehenden Bauabschnitt des Turmbauwerks (1) auf einer Schicht aus Epoxidharz aufgestellt werden und horizontale Außenfugen (7) zwischen übereinander gestellten Außenplatten (3) und/oder horizontale Innenfugen (8) zwischen übereinander gestellten Innenplatten (4) durch die Schicht aus Epoxidharz geschlossen werden.

8. Verfahren zur Herstellung eines Turmbauwerks (1) nach einem der Ansprüche 1 bis 6, **dadurch gekennzeichnet, dass** die Doppelwandelemente (2) bei der Montage direkt auf dem vorhergehenden Bauabschnitt des Turmbauwerks (1) aufgestellt werden und die horizontalen Außenfugen (7) und/oder horizontalen Innenfugen (8) als trockene Fugen ausgebildet werden.

9. Verfahren zur Herstellung eines Turmbauwerks (1) nach einem der Ansprüche 4 bis 6, **dadurch gekennzeichnet, dass** die Doppelwandelemente (2) bei der Montage auf dem vorhergehenden Bauabschnitt des Turmbauwerks (1) auf Distanzhaltern aufgestellt werden, die horizontalen Außenfugen (7) und/oder horizontalen Innenfugen (8) mit Schalelementen (22) geschlossen werden und das Verfüllen der horizontalen Außenfugen (7) und/oder horizontalen Innenfugen (8) mit Vergussmörtel (21) erfolgt.

10. Verfahren zur Herstellung eines Turmbauwerks (1) nach einem der Ansprüche 4 bis 6, **dadurch gekennzeichnet, dass** die Doppelwandelemente (2) bei der Montage auf dem vorhergehenden Bauabschnitt des Turmbauwerks (1) auf Distanzhaltern mit einer Höhe von 20 mm bis 50 mm aufgestellt werden, die horizontalen Außenfugen (7) und/oder Innenfugen (8) mit Schalelementen (22) geschlossen werden und das Verfüllen der horizontalen Außenfugen (7) und/oder Innenfugen (8) gleichzeitig mit dem Verfüllen der Doppelwandelemente (2) mit Beton erfolgt.

11. Verfahren zur Herstellung eines Turmbauwerks (1) nach einem der Ansprüche 2 bis 10, **dadurch gekennzeichnet, dass** bei der Montage der Doppelwandelemente (2) auf dem Vormontageplatz
- in einem ersten Schritt nur die vertikalen Außenfugen (5) zwischen den Außenplatten (3) geschlossen werden und offene vertikale Innenfugen (6) zwischen den Innenplatten (4) verbleiben,
- in einem zweiten Schritt im Bereich der vertikalen Außenfugen (5) zwischen den Außenplatten (3) und der vertikalen Innenfugen (6) zwischen den Innenplatten (4) eine Bewehrung (9), welche die vertikalen Außenfugen (5) und vertikalen Innenfugen (6) kreuzt, eingebaut wird,
- die Doppelwandelemente (2) im Bereich der vertikalen Außenfugen (5) und der vertikalen Innenfugen (6) kraftschlüssig miteinander verbunden werden und
- die vertikalen Innenfugen (6) zwischen den Innenplatten (4) mit Schalelementen (22) geschlossen werden.

12. Verfahren zur Herstellung eines Turmbauwerks (1) nach einem der Ansprüche 2 bis 10, **dadurch gekennzeichnet, dass** bei der Montage der Doppelwandelemente (2) auf dem Vormontageplatz
- in einem ersten Schritt nur die vertikalen Innenfugen (6) zwischen den Innenplatten (4) geschlossen werden und offene vertikale Außenfugen (5) zwischen den Außenplatten (3) verbleiben,
- in einem zweiten Schritt im Bereich der vertikalen Außenfugen (5) zwischen den Außenplatten (3) und der vertikalen Innenfugen (6) zwischen den Innenplatten (4) eine Bewehrung (9), welche die vertikalen Außenfugen (5) und vertikalen Innenfugen (6) kreuzt, eingebaut wird,
- die Doppelwandelemente (2) im Bereich der vertikalen Außenfugen (5) und der vertikalen Innenfugen (6) kraftschlüssig miteinander verbunden werden und
- die vertikalen Außenfugen (5) zwischen den Außenplatten (3) mit Schalelementen (22) geschlossen werden.

13. Verfahren zur Herstellung eines Turmbauwerks (1) nach einem der Ansprüche 4 bis 12, **dadurch gekennzeichnet, dass** bei der Montage der Doppelwandelemente (2) auf dem vorhergehenden Bauabschnitt
- in einem ersten Schritt nur die Außenplatten (3) an ihren Unterkanten auf dem vorhergehenden Bauabschnitt jeweils über die horizontale Außenfuge (7) aufgelagert werden und zwischen den Innenplatten (4) und dem vorhergehenden Bauabschnitt eine offene horizontale Innenfuge (8) verbleibt,
- eine Kontrolle der Auflagerung der Doppelwandelemente (2) entlang des Umfangs (12) über die offene horizontale Innenfuge (8) erfolgt,
- allenfalls zusätzlich erforderliche Abdichtungsmaßnahmen der horizontalen Außenfuge (7) durchgeführt werden und
- die horizontale Innenfuge (8) mit Schalelementen (22) verschlossen wird.

14. Verfahren zur Herstellung eines Turmbauwerks (1) nach einem der Ansprüche 4 bis 12, **dadurch gekennzeichnet, dass** bei der Montage der Doppelwandelemente (2) auf dem vorhergehenden Bauabschnitt
- in einem ersten Schritt nur die Innenplatten (4) an ihren Unterkanten auf dem vorhergehenden Bauabschnitt jeweils über die horizontale Innenfuge (8) aufgelagert werden und zwischen den Außenplatten (3) und dem vorhergehenden Bauabschnitt eine offene horizontale Außenfuge (7) verbleibt,
- eine Kontrolle der Auflagerung der Doppelwandelemente (2) entlang des Umfangs (12) über die offene horizontale Außenfuge (7) erfolgt,
- allenfalls zusätzlich erforderliche Abdichtungsmaßnahmen der horizontalen Innenfuge (8) durchgeführt werden und
- die horizontale Außenfuge (7) mit Schalelementen (22) verschlossen wird.

15. Verfahren zur Herstellung eines Turmbauwerks (1) nach einem der Ansprüche 2 bis 14, **dadurch gekennzeichnet, dass** die horizontalen Außenfugen (7) und/oder die horizontalen Innenfugen (8) der zu einem Flächentragwerk (11) zusammengefügten Doppelwandelemente (2) auf dem Vormontageplatz durch Schleifen, Fräsen oder einen Höhenausgleich mit Vergussmörtel (21) so behandelt werden, dass im Wesentlichen alle Punkte der oberen und unteren horizontalen Außenfugen (7) und/oder der oberen und unteren horizontalen Innenfugen (8) in zwei horizontalen Ebenen, die zueinander einen konstanten Abstand einer Bauabschnittshöhe (36) aufweisen, liegen.

16. Verfahren zur Herstellung eines Turmbauwerks (1) nach einem der Ansprüche 1 bis 15, **dadurch gekennzeichnet, dass** die Außenplatten (3) der Doppelwandelemente (2) aus einem eingefärbten Beton bestehen.

17. Verfahren zur Herstellung eines Turmbauwerks (1) nach einem der Ansprüche 1 bis 16, **dadurch gekennzeichnet, dass** eine Höhe (38) eines Doppelwandelements (2) im Montagezustand von 2 m bis 15 m beträgt.

18. Verfahren zur Herstellung eines Turmbauwerks (1) nach einem der Ansprüche 1 bis 17, **dadurch gekennzeichnet, dass** die Bewehrung (9), die die vertikalen Außenfugen (5) und vertikalen Innenfugen (6) kreuzt, als Spannglieder (44) in Hüllrohren (47) eingebaut wird und die Spannglieder (44) an den Spanngliedverankerungen (45) vorgespannt werden.

19. Verfahren zur Herstellung eines Turmbauwerks (1) nach Anspruch 18, **dadurch gekennzeichnet, dass** die Spannglieder (44) nach dem Aufstellen der Doppelwandelemente (2) auf dem Vormontageplatz so vorgespannt werden, dass die vertikalen Außenfugen (5) und vertikalen Innenfugen (6) überdrückt werden und die einzelnen Doppelwandelemente (2) dadurch zu einem stabilen Flächentragwerk (11) zusammengefügt werden.

20. Verfahren zur Herstellung eines Turmbauwerks (1) nach einem der Ansprüche 1 bis 19, **dadurch gekennzeichnet, dass** in den horizontalen Außenfugen (7) und horizontalen Innenfugen (8) Dichtungsprofile (41) eingebaut werden, wobei die auf den Außenplatten (3) angeordneten Dichtungsprofile (41) auf der Außenseite des Turmbauwerks (1) angeordnet sind und die auf den Innenplatten (4) angeordneten Dichtungsprofile (41) auf der zum Hohlraum (35) zugewandten Seite angeordnet sind, wobei beim Absetzen der Doppelwandelemente (2) des darüberliegenden Bauabschnitts das Dichtungsprofil (41) gestaucht wird.

21. Verfahren zur Herstellung eines Turmbauwerks (1) nach einem der Ansprüche 1 bis 20, **dadurch gekennzeichnet, dass** in den horizontalen Außenfugen (7) und horizontalen Innenfugen (8) Dichtungsbänder (42) mit Vergussmörtel (21) gefüllt werden, wobei die Dichtungsbänder (42) Öffnungen (43) aufweisen und die Öffnungen (43) der auf den Außenplatten (3) und Innenplatten (4) aufliegenden Dichtungsbänder (42) jeweils so angeordnet sind, dass beim Absetzen der darüberliegenden Doppelwandelemente (2) überschüssiger Vergussmörtel (21) in den Hohlraum zwischen den Außenplatten (3) und den Innenplatten (4) austreten kann.

## Claims

1. A method for producing a tower construction (1) from reinforced concrete having at least one cavity (35) that extends in the longitudinal direction within the tower construction (1), wherein
- along a periphery (12) of the tower construction (1) there are arranged double-wall elements (2), each comprising an external plate (3) as well as an internal plate (4) in vertical or inclined position, forming vertical external joints (5) in-between adjacent external plates (3) as well as vertical internal joints (6) in-between adjacent internal plates (4),
- the double-wall elements (2) are secured against toppling over in their position arranged next to each other by means of an attachment to rails (15) of a climbing formwork (14),
- in the area of the vertical external joints (5) as well as the vertical internal joints (6) between the external plates (3) and the internal plates (4) there is installed a reinforcement (9), which crosses the vertical external joints (5) and the vertical internal joints (6),
- in the area of the horizontal external joints (7) as well as the horizontal internal joints (8) between the external plates (3) and the internal plates (4) there is installed a reinforcement (10), which crosses the horizontal external joints (7) and the horizontal internal joints (8),
- the vertical external joints (5) and the vertical internal joints (6) in-between the double-wall elements (2) are closed using filling concrete (23), grouting mortar (21), silicone or a sealing strip,
- a working platform (13) arranged along the periphery (12) of the tower construction (1) is lifted by one construction section height (36),
- the double-wall elements (2) are filled with filling concrete (23) and
- the above-indicated steps for producing a construction section having a construction section height (36), which essentially corresponds to a height (38) of the double-wall elements (2), are repeated as often as necessary to obtain a desired overall height of the tower construction (1).

2. A method for producing a tower construction (1) according to claim 1, **characterized in that** the securing of the arranged double-wall elements (2) against toppling over in the state of construction is performed by
- the double-wall elements (2) being arranged on the ground on a plain pre-mounting site in a vertical or slightly inclined position,
- the double-wall elements (2) being maintained in the arranged position thereof by means of temporary supports,
- the double-wall elements (2) being aligned so that the bottom edges of the external plates (3) as well as of the internal plates (4) are each situated in a horizontal plane,
- the double-wall elements (2) being connected with each other into a plane load-bearing structure (11) in a force-fit way,
- the temporary supports being subsequently removed,
- the plane load-bearing structure (11), which is composed of double-wall elements (2) being connected with each other, being lifted,
- the plane load-bearing structure (11) being lowered onto a periphery (12) of the construction section of the tower construction (1) last erected and
- being aligned accurately in position.

3. A method for producing a tower construction (1) according to claim 1 or 2, **characterized in that** the double-wall elements (2) are arranged so that a joint width (37) of the vertical external joints (5) and/or of the vertical internal joints (6) in-between the adjacent double-wall elements (2) is from 5 mm to 400 mm, preferably from 5 mm to 40 mm.

4. A method for producing a tower construction (1) according to claim 3, **characterized in that** the vertical external joints (5) and/or the vertical internal joints (6) are filled using a grouting mortar (21), if necessary using formwork elements (22).

5. A method for producing a tower construction (1) according to any of claims 1 to 3, **characterized in that** the double-wall elements (2) are arranged so that a joint width (37) of the vertical external joints (5) and/or the vertical internal joints (6) in-between the adjacent double-wall elements (2) is closed by means of formwork elements (22), and the filling of the vertical external joints (5) and/or of the vertical internal joints (6) is performed simultaneously with the filling of the double-wall elements (2) using filling concrete (23).

6. A method for producing a tower construction (1) according to claim 4 or 5, **characterized in that** the working platform (13) and the formwork elements (22) for the vertical external joints (5) and/or the vertical internal joints (6) are mounted on a climbing formwork (14) and that the attachment elements (16) for the climbing formwork (14) are arranged in the double-wall elements (2).

7. A method for producing a tower construction (1) according to any of claims 1 to 6, **characterized in that** the double-wall elements (2) are arranged, when being mounted on the preceding construction section of the tower construction (1), on a layer of epoxy resin, and that horizontal external joints (7) in-between external plates (3) that are arranged one above the other and/or horizontal internal joints (8) in-between internal plates (4) that are arranged one above the other are closed by the layer of epoxy resin.

8. A method for producing a tower construction (1) according to any of claims 1 to 6, **characterized in that** the double-wall elements (2), while being mounted, are arranged directly onto the preceding construction section of the tower construction (1), and that the horizontal external joints (7) and/or the horizontal internal joints (8) are embodied as dry joints.

9. A method for producing a tower construction (1) according to any of claims 4 to 6, **characterized in that** the double-wall elements (2) while being mounted on the preceding construction section of the tower construction (1) are arranged on spacers, that the horizontal external joints (7) and/or the horizontal internal joints (8) are closed using formwork elements (22), and that the filling of the horizontal external joints (7) and/or the horizontal internal joints (8) is realized using grouting mortar (21).

10. A method for producing a tower construction (1) according to any of claims 4 to 6, **characterized in that** the double-wall elements (2), while being mounted on the preceding construction section of the tower construction (1), are arranged on spacers having a height of 20 mm to 50 mm, that the horizontal external joints (7) and/or the internal joints (8) are closed using formwork elements (22), and that filling of the horizontal external joints (7) and/or internal joints (8) is performed simultaneously with the filling of the double-wall elements (2) using concrete.

11. A method for producing a tower construction (1) according to any of claims 2 to 10, **characterized in that** while mounting the double-wall elements (2) on the pre-mounting site
- in a first step there are closed only the vertical external joints (5) in-between the external plates (3), with open vertical internal joints (6) remaining in-between the internal plates (4),
- in a second step there is installed in the area of the vertical external joints (5) in-between the external plates (3) and the vertical internal joints (6) in-between the internal plates (4) a reinforcement (9), which crosses the vertical external joints (5) and the vertical internal joints (6),
- the double-wall elements (2) are connected with each other in the area of the vertical external joints (5) and the vertical internal joints (6) in a force-fit way and
- the vertical internal joints (6) in-between the internal plates (4) are closed by means of formwork elements (22).

12. A method for producing a tower construction (1) according to any of claims 2 to 10, **characterized in that** while mounting the double-wall elements (2) on the pre-mounting site
- in a first step only the vertical internal joints (6) in-between the internal plates (4) are closed, with open vertical external joints (5) remaining in-between the external plates (3),
- in a second step there is installed in the area of the vertical external joints (5) in-between the external plates (3) and the vertical internal joints (6) in-between the internal plates (4) a reinforcement (9), which crosses the vertical external joints (5) and the vertical internal joints (6),
- the double-wall elements (2) are connected with each other in the area of the vertical external joints (5) and the vertical internal joints (6) in a force-fit way and
- the vertical external joints (5) in-between the external plates (3) are closed using formwork elements (22).

13. A method for producing a tower construction (1) according to any of claims 4 to 12, **characterized in that** while mounting the double-wall elements (2) on the preceding construction section
- in a first step only the external plates (3) are supported on the bottom edges thereof on the preceding construction section respectively above the horizontal external joint (7), with an open horizontal internal joint (8) remaining between the internal plates (4) and the preceding construction section,
- an inspection of the support of the double-wall elements (2) along the periphery (12) is performed via the open horizontal internal joint (8),
- any additionally required sealing measures for the horizontal external joint (7) are performed and
- the horizontal internal joint (8) is closed using formwork elements (22).

14. A method for producing a tower construction (1) according to any of claims 4 to 12, **characterized in that** while mounting the double-wall elements (2) on the preceding construction section
- in a first step only the internal plates (4) are supported on the bottom edges thereof on the preceding construction section respectively above the horizontal internal joint (8), with an open horizontal external joint (7) remaining between the external plates (3) and the preceding construction section,
- an inspection of the support of the double-wall elements (2) along the periphery (12) is performed via the open horizontal external joint (7),
- any additionally required sealing measures for the horizontal internal joint (8) are performed and
- the horizontal external joint (7) is closed using formwork elements (22).

15. A method for producing a tower construction (1) according to any of claims 2 to 14, **characterized in that** the horizontal external joints (7) and/or the horizontal internal joints (8) of the double-wall elements (2) that are combined into a plane load-bearing structure (11) are treated on the pre-mounting site by means of grinding, milling or height compensation using grouting mortar (21) in a way so that essentially all the points of the upper and lower horizontal external joints (7) and/or the upper and lower horizontal internal joints (8) are situated in two horizontal planes having a constant distance to each other of a construction section height (36).

16. A method for producing a tower construction (1) according to any of claims 1 to 15, **characterized in that** the external plates (3) of the double-wall elements (2) are comprised of coloured concrete.

17. A method for producing a tower construction (1) according to any of claims 1 to 16, **characterized in that** a height (38) of a double-wall element (2) has 2 m to 15 m in the mounting state.

18. A method for producing a tower construction (1) according to any of claims 1 to 17, **characterized in that** the reinforcement (9), which crosses the vertical external joints (5) and the vertical internal joints (6), is installed as tendons (44) in jacket tubes (47) and that the tendons (44) are pre-tensioned at the tendon anchors (45).

19. A method for producing a tower construction (1) according to claim 18, **characterized in that** the tendons (44) upon arrangement of the double-wall elements (2) on the pre-mounting site are pre-tensioned in a way so that the vertical external joints (5) and the vertical internal joints (6) are over-compressed and the individual double-wall elements (2) are thus combined into a stable plane load-bearing structure (11).

20. A method for producing a tower construction (1) according to any of claims 1 to 19, **characterized in that** in the horizontal external joints (7) and the horizontal internal joints (8) there are installed sealing profiles (41), wherein the sealing profiles (41) arranged on the external plates (3) are arranged on the exterior face of the tower construction (1) and the sealing profiles (41) arranged on the internal plates (4) are arranged on the side facing the cavity (35), wherein, while lowering the double-wall elements (2) of the construction site situated above, the sealing profile (41) is compressed.

21. A method for producing a tower construction (1) according to any of claims 1 to 20, **characterized in that** in the horizontal external joints (7) and the horizontal internal joints (8) sealing strips (42) are filled using grouting mortar (21), wherein the sealing strips (42) have openings (43) and the openings (43) of the sealing strips (42) resting on the external plates (3) and the internal plates (4), are each arranged in a way so that when lowering the double-wall elements (2) situated above, excessive grouting mortar (21) may exit into the cavity between the external plates (3) and the internal plates (4).

## Revendications

1. Procédé de construction d'une tour (1) en béton armé avec au moins un espace creux (35) s'étendant en direction longitudinale à l'intérieur de la tour (1), dans lequel
- on dresse le long d'un périmètre (12) de la tour (1) des éléments à double paroi (2) comprenant chacun une plaque extérieure (3) ainsi qu'une plaque intérieure (4) en position verticale ou inclinée avec formation de joints extérieurs verticaux (5) entre des plaques extérieures voisines (3) ainsi que de joints intérieurs verticaux (6) entre des plaques intérieures voisines (4),
- on sécurise les éléments à double paroi (2) contre un renversement dans leur position dressée l'un à côté de l'autre par une fixation à des rails (15) d'un coffrage grimpant (14),
- on installe dans la région des joints extérieurs verticaux (5) ainsi que des joints intérieurs verticaux (6) entre les plaques extérieures (3) et les plaques intérieures (4) une armature (9), qui croise les joints extérieurs verticaux (5) et les joints intérieurs verticaux (6),
- on installe dans la région de joints extérieurs horizontaux (7) ainsi que de joints intérieurs horizontaux (8) entre les plaques extérieures (3) et les plaques intérieures (4) une armature (10), qui croise les joints extérieurs horizontaux (7) et les joints intérieurs horizontaux (8),
- on ferme les joints extérieurs verticaux (5) et les joints intérieurs verticaux (6) entre les éléments à double paroi (2) avec du béton de remplissage (23), du coulis de ciment (21), du silicone ou une bande d'étanchéité,
- on élève une plate-forme de travail (13) disposée le long du périmètre (12) de la tour (1) d'une hauteur de segment de construction (36),
- on remplit les éléments à double paroi (2) avec du béton de remplissage (23) et
- on répète les étapes indiquées ci-dessus pour la construction d'un segment de construction avec une hauteur de segment de construction (36), qui correspond essentiellement à une hauteur (38) des éléments à double paroi (2), aussi souvent que nécessaire jusqu'à ce qu'une hauteur totale désirée de la tour (1) soit atteinte.

2. Procédé de construction d'une tour (1) selon la revendication 1, **caractérisé en ce que** l'on effectue la sécurisation des éléments à double paroi dressés (2) contre un renversement à l'état construit, par le fait que
- on dresse les éléments à double paroi (2) sur le sol sur un emplacement de pré-montage plan dans une position verticale ou légèrement inclinée,
- on maintient les éléments à double paroi (2) dans leur position dressée au moyen de soutiens temporaires,
- on aligne les éléments à double paroi (2) de telle manière que les bords inférieurs des plaques extérieures (3) ainsi que des plaques intérieures (4) se trouvent respectivement dans un plan horizontal,
- on assemble les éléments à double paroi (2) par force l'un à l'autre en une structure porteuse plane (11),
- on enlève ensuite les soutiens temporaires,
- on élève la structure porteuse plane (11) composée d'éléments à double paroi assemblés (2),
- on dépose la structure porteuse plane (11) sur un périmètre (12) du dernier segment de construction érigé de la tour (1) et
- on l'aligne en position précise.

3. Procédé de construction d'une tour (1) selon une revendication 1 ou 2, **caractérisé en ce que** l'on dresse les éléments à double paroi (2), de telle manière qu'une largeur de joint (37) des joints extérieurs verticaux (5) et/ou des joints intérieurs verticaux (6) entre des éléments à double paroi voisins (2) vaille de 5 mm à 400 mm, de préférence de 5 mm à 40 mm.

4. Procédé de construction d'une tour (1) selon la revendication 3, **caractérisé en ce que** l'on remplit les joints extérieurs verticaux (5) et/ou les joints intérieurs verticaux (6) avec un coulis de ciment (21), si nécessaire en utilisant des éléments de coffrage (22).

5. Procédé de construction d'une tour (1) selon l'une quelconque des revendications 1 à 3, **caractérisé en ce que** l'on dresse les éléments à double paroi (2) de telle manière qu'une largeur de joint (37) des joints extérieurs verticaux (5) et/ou des joints intérieurs verticaux (6) entre des éléments à double paroi voisins (2) soit fermée avec des éléments de coffrage (22) et on effectue le remplissage des joints extérieurs verticaux (5) et/ou des joints intérieurs verticaux (6) en même temps que le remplissage des éléments à double paroi (2) avec du béton de remplissage (23).

6. Procédé de construction d'une tour (1) selon une revendication 4 ou 5, **caractérisé en ce que** la plate-forme de travail (13) et les éléments de coffrage (22) pour les joints extérieurs verticaux (5) et/ou les joints intérieurs verticaux (6) sont montés sur le coffrage grimpant (14) et des éléments de fixation (16) pour le coffrage grimpant (14) sont disposés dans les éléments à double paroi (2).

7. Procédé de construction d'une tour (1) selon l'une quelconque des revendications 1 à 6, **caractérisé en ce que** l'on dresse les éléments à double paroi (2) lors du montage sur le segment de construction précédent de la tour (1) sur une couche de résine époxy et on ferme des joints extérieurs horizontaux (7) entre des plaques extérieures (3) posées l'une au-dessus de l'autre et/ou des joints intérieurs horizontaux (8) entre des plaques intérieures (4) posées l'une au-dessus de l'autre au moyen de la couche de résine époxy.

8. Procédé de construction d'une tour (1) selon l'une quelconque des revendications 1 à 6, **caractérisé en ce que** l'on dresse les éléments à double paroi (2) lors du montage directement sur le segment de construction précédent de la tour (1) et on réalise les joints extérieurs horizontaux (7) et/ou les joints intérieurs horizontaux (8) sous forme de joints secs.

9. Procédé de construction d'une tour (1) selon l'une quelconque des revendications 4 à 6, **caractérisé en ce que** l'on dresse les éléments à double paroi (2) lors du montage sur le segment de construction précédent de la tour (1) sur des éléments d'écartement, on ferme les joints extérieurs horizontaux (7) et/ou les joints intérieurs horizontaux (8) avec des éléments de coffrage (22) et on effectue le remplissage des joints extérieurs horizontaux (7) et/ou des joints intérieurs horizontaux (8) avec du coulis de ciment (21).

10. Procédé de construction d'une tour (1) selon l'une quelconque des revendications 4 à 6, **caractérisé en ce que** l'on dresse les éléments à double paroi (2) lors du montage sur le segment de construction précédent de la tour (1) sur des éléments d'écartement d'une hauteur de 20 mm à 50 mm, on ferme les joints extérieurs horizontaux (7) et/ou les joints intérieurs horizontaux (8) avec des éléments de coffrage (22) et on effectue le remplissage des joints extérieurs horizontaux (7) et/ou des joints intérieurs horizontaux (8) en même temps que le remplissage des éléments à double paroi (2) avec du béton.

11. Procédé de construction d'une tour (1) selon l'une quelconque des revendications 2 à 10, **caractérisé en ce que**, lors du montage des éléments à double paroi (2) sur l'emplacement de pré-montage,
- dans une première étape, on ne ferme que les joints extérieurs verticaux (5) entre les plaques extérieures (3) et les joints intérieurs verticaux (6) entre les plaques intérieures (4) restent ouverts,
- dans une deuxième étape, on installe dans la région des joints intérieurs verticaux (5) entre les plaques extérieures (3) et des joints intérieurs verticaux (6) entre les plaques intérieures (4) une armature (9), qui croise les joints extérieurs verticaux (5) et les joints intérieurs verticaux (6),
- on assemble les éléments à double paroi (2) par force l'un à l'autre dans la région des joints extérieurs verticaux (5) et des joints intérieurs verticaux (6) et
- on ferme les joints intérieurs verticaux (6) entre les plaques intérieures (4) avec des éléments de coffrage (22).

12. Procédé de construction d'une tour (1) selon l'une quelconque des revendications 2 à 10, **caractérisé en ce que**, lors du montage des éléments à double paroi (2) sur l'emplacement de pré-montage,
- dans une première étape, on ne ferme que les joints intérieurs verticaux (6) entre les plaques intérieures (4) et les joints extérieurs verticaux (5) entre les plaques extérieures (3) restent ouverts,
- dans une deuxième étape, on installe dans la région des joints extérieurs verticaux (5) entre les plaques extérieures (3) et des joints intérieurs verticaux (6) entre les plaques intérieures (4) une armature (9), qui croise les joints extérieurs verticaux (5) et les joints intérieurs verticaux (6),
- on assemble les éléments à double paroi (2) par force l'un à l'autre dans la région des joints extérieurs verticaux (5) et des joints intérieurs verticaux (6) et
- on ferme les joints extérieurs verticaux (5) entre les plaques extérieures (3) avec des éléments de coffrage (22).

13. Procédé de construction d'une tour (1) selon l'une quelconque des revendications 4 à 12, **caractérisé en ce que**, lors du montage des éléments à double paroi (2) sur le segment de construction précédent,
- dans une première étape, on ne pose que les plaques extérieures (3) à leurs bords inférieurs sur le segment de construction précédent respectivement au moyen du joint extérieur horizontal (7) et il reste entre les plaques intérieures (4) et le segment de construction précédent un joint intérieur horizontal ouvert (8),
- on effectue un contrôle de l'appui des éléments à double paroi (2) le long du périmètre (12) au moyen du joint intérieur horizontal ouvert (8),
- dans tous les cas on prend en plus les mesures d'étanchéité nécessaires du joint extérieur horizontal (7) et
- on ferme le joint intérieur horizontal (8) avec des éléments de coffrage (22).

14. Procédé de construction d'une tour (1) selon l'une quelconque des revendications 4 à 12, **caractérisé en ce que**
- dans une première étape, on ne pose que les plaques intérieures (4) à leurs bords inférieurs sur le segment de construction précédent respectivement au moyen du joint intérieur horizontal (8) et il reste entre les plaques extérieures (3) et le segment de construction précédent un joint extérieur horizontal ouvert (7),
- on effectue un contrôle de l'appui des éléments à double paroi (2) le long du périmètre (12) au moyen du joint extérieur horizontal ouvert (7),
- dans tous les cas, on prend en plus les mesures d'étanchéité nécessaires du joint intérieur horizontal (8) et
- on ferme le joint extérieur horizontal (7) avec des éléments de coffrage (22).

15. Procédé de construction d'une tour (1) selon l'une quelconque des revendications 2 à 14, **caractérisé en ce que** l'on traite les joints extérieurs horizontaux (7) et/ou les joints intérieurs horizontaux (8) des éléments à double paroi (2) assemblés en une structure porteuse plane (11) sur l'emplacement de pré-montage par meulage, fraisage ou un équilibrage de hauteur avec du coulis de ciment (21), de telle manière qu'essentiellement tous les points des joints extérieurs horizontaux supérieurs et inférieurs (7) et/ou des joints intérieurs horizontaux supérieurs et inférieurs (8) se situent dans deux plans horizontaux, qui présentent de l'un à l'autre une distance constante égale à une hauteur de segment de construction (36).

16. Procédé de construction d'une tour (1) selon l'une quelconque des revendications 1 à 15, **caractérisé en ce que** les plaques extérieures (3) des éléments à double paroi (2) sont constituées d'un béton coloré.

17. Procédé de construction d'une tour (1) selon l'une quelconque des revendications 1 à 16, **caractérisé en ce qu'**une hauteur (38) d'un élément à double paroi (2) dans l'état de montage vaut de 2 m à 15 m.

18. Procédé de construction d'une tour (1) selon l'une quelconque des revendications 1 à 17, **caractérisé en ce que** l'armature (9), qui croise les joints extérieurs verticaux (5) et les joints intérieurs verticaux (6), est installée comme élément de précontrainte (44) dans des gaines (47) et les éléments de précontrainte (44) sont précontraints aux ancrages (45) des éléments de précontrainte.

19. Procédé de construction d'une tour (1) selon la revendication 18, **caractérisé en ce que** l'on précontraint les éléments de précontrainte (44) après le dressage des éléments à double paroi (2) sur l'emplacement de pré-montage de telle manière que les joints extérieurs verticaux (5) et les joints intérieurs verticaux (6) soient pontés et que les éléments à double paroi individuels (2) soient ainsi assemblés en une structure porteuse plane stable (11).

20. Procédé de construction d'une tour (1) selon l'une quelconque des revendications 1 à 19, **caractérisé en ce que** l'on installe des profilés d'étanchéité (41) dans les joints extérieurs horizontaux (7) et dans les joints intérieurs horizontaux (8), dans lequel les profilés d'étanchéité (41) disposés sur les plaques extérieures (3) sont disposés sur le côté extérieur de la tour (1) et les profilés d'étanchéité (41) disposés sur les plaques intérieures (4) sont disposés sur le côté tourné vers l'espace creux (35), dans lequel on écrase le profilé d'étanchéité (41) lors de la pose des éléments à double paroi (2) du segment de construction sus-jacent.

21. Procédé de construction d'une tour (1) selon l'une quelconque des revendications 1 à 20, **caractérisé en ce que** l'on remplit des bandes d'étanchéité (42) avec du coulis de ciment (21) dans les joints extérieurs horizontaux (7) et dans les joints intérieurs horizontaux (8), dans lequel les bandes d'étanchéité (42) présentent des ouvertures (43) et les ouvertures (43) des bandes d'étanchéité (42) reposant sur les plaques extérieures (3) et les plaques intérieures (4) sont respectivement disposées de telle manière que, lors de la pose des éléments à double paroi sus-jacents (2) le coulis de ciment excédentaire (21) puisse s'échapper dans l'espace creux entre les plaques extérieures (3) et les plaques intérieures (4).
